# EUROPEAN PATENT APPLICATION

(11) **EP 4 608 000 A1**
(43) Date of publication of application: **27.08.2025**
(21) Application number: 23879044.8
(22) Date of filing: 15.10.2023
(51) Int. Cl.: H04W 28/02

(54) **METHOD AND APPARATUS FOR COMMUNICATION NODE USED FOR WIRELESS COMMUNICATION**

(30) Priority: 20.10.2022 CN 202211286930
(71) Applicant: Apogee Networks, LLC, Dallas, TX 75201 (US)
(72) Inventor: YU, Qiaoling, Shanghai 201206 (CN); ZHANG, Xiaobo, Shanghai 201206 (CN)
(74) Representative: Gunzelmann, Rainer
(86) International application number: PCT/CN2023/124634
(87) International publication number: WO 2024/083055

(57) **Abstract**

The present application discloses a method and apparatus for a communication node used for wireless communication. The method comprises: in response to a case that a first data packet set is valid, the communication node triggering first buffer status reporting; in response to a case that any candidate condition in a first candidate condition set is satisfied, canceling the first buffer status reporting, wherein the first data packet set comprises at least one data packet, each data packet in the first data packet set is a data packet on an MAC sublayer, the first candidate condition set comprises at least a first condition and a second condition, the first condition comprises that the first data packet set is discarded, the second condition comprises that a first MAC PDU is transmitted and the first buffer status reporting is generated before the first MAC PDU is assembled, and the first MAC PDU indicates a buffer status. Aiming at a high-rate low-latency service having a dependency relationship, the present application provides a buffer status reporting solution based on data packet discarding, and the present solution avoids resource waste and reduces power consumption.

## Description

### SPECIFICATION

### Technical Field

This application relates to a transmission method and apparatus in a wireless communication system, and relates to a method and an apparatus for a large data amount, in particular, a high-rate low-delay service.

### Related Art

Application scenarios of a future wireless communication system are increasingly diversified, and different performance requirements are raised on the system in different application scenarios. To satisfy different performance requirements in a plurality of application scenarios, in the #72 plenary session of 3GPP (3rd Generation Partner Project, 3rd Generation Partner Project) RAN (Radio Access Network, radio access network), it is decided to research new radio (NR, New Radio) technologies. An WI (Work Item, Work Item) of NR (New Radio, New Radio) is passed in the #75 plenary session of 3GPP RAN, and NR starts to be standardized. XR is an important research direction of R18 (Release 18).

### SUMMARY

In an existing protocol, a data buffer report (Buffer Status Reporting, BSR) process is used to provide information about a data amount. Information that is about a data amount and that is carried by one BSR MAC CE is used for resource allocation. An XR service includes a VR (virtual reality) service, an AR (augmented reality) service, and a CG (cloud game) service, and has features of a high rate and a low delay. The XR service is also an interactive service, and has a strict requirement on response duration of the service. For example, when gesture information of a user is transmitted to a server, an image fed back by the server needs to be presented on a terminal of the user within very short duration; otherwise, the user feels an obvious delay, which affects user experience. The XR service includes various data, such as a video, an audio, and data used to control various sensors. The information has a particular dependency relationship. An existing data buffer report mechanism cannot satisfy a requirement of the XR service. Therefore, the data buffer report mechanism needs to be enhanced.

In view of the foregoing problem, this application provides a solution for a data buffer report. The XR service is used as an example in the foregoing descriptions of the problem. This application is also applicable to, for example, another scenario of a service with a high data rate. Further, although this application provides a specific implementation for XR, this application can also be used in a scenario such as LTE, to obtain a technical effect similar to that in NR. Further, although this application is originally aimed at a Uu air interface, this application can also be used in a PC5 interface. Further, although this application is originally aimed at a scenario of a terminal and a base station, this application is also applicable to a V2X (Vehicle-To-Everything, vehicle-to-everything) scenario, a communication scenario between a terminal and a relay, and a communication scenario between a relay and a base station, to obtain a technical effect similar to that in the scenario of a terminal and a base station. Further, although this application is originally aimed at the scenario of a terminal and a base station, this application is also applicable to a communication scenario of IAB (Integrated Access and Backhaul, integrated access and backhaul), to obtain a technical effect similar to that in the scenario of a terminal and a base station. Further, although this application is originally aimed at a scenario of a terrestrial network (Terrestrial Network, terrestrial network), this application is also applicable to a scenario of a non-terrestrial network (Non-Terrestrial Network, NTN), to obtain a technical effect similar to that in the scenario of a TN. In addition, using a unified solution in different scenarios further helps reduce complexity and costs of hardware.

In an embodiment, for an explanation of a terminology (Terminology) in this application, refer to a definition in a standard protocol TS36 series of 3GPP.

In an embodiment, for an explanation of a terminology in this application, refer to a definition in a standard protocol TS38 series of 3GPP.

In an embodiment, for an explanation of a terminology in this application, refer to a definition in a standard protocol TS37 series of 3GPP.

In an embodiment, for an explanation of a terminology in this application, refer to a definition in a standard protocol of the IEEE (Institute of Electrical and Electronics Engineers, Institute of Electrical and Electronics Engineers).

It should be noted that embodiments and features in the embodiments of any node in this application is applicable to any other node without a conflict. Embodiments and features in the embodiments of this application may be arbitrarily combined with each other without a conflict.

This application discloses a method for a first node used for wireless communication. The method includes:
triggering (trigger) a first buffer status report in response to that a first data packet set becomes available (becomes available); or canceling (cancel) the first buffer status report in response to that any candidate condition in a first candidate condition set is satisfied.

The first data packet set includes at least one data packet, and each data packet in the first data packet set is a data packet above a MAC sublayer (sublayer). The first candidate condition set includes at least one of a first condition or a second condition. The first condition includes that the first data packet set is discarded. The second condition includes that a first MAC PDU (Protocol Data Unit, protocol data unit) is sent and the first buffer status report is generated before the first MAC PDU is assembled. The first MAC PDU indicates a buffer status.

In an embodiment, the first candidate condition set includes at least the first condition and the second condition.

In an embodiment, the first candidate condition set includes at least the first condition.

In an embodiment, the first candidate condition set includes at least the second condition.

In an embodiment, a problem to be resolved in this application includes time of canceling the first buffer status report.

In an embodiment, a characteristic of the foregoing method includes: canceling the first buffer status report when the first condition is satisfied.

In an embodiment, the characteristic of the foregoing method includes: discarding the first data packet set to cancel the first buffer status report.

In an embodiment, the characteristic of the foregoing method includes: canceling the first buffer status report when the second condition is satisfied.

In an embodiment, a characteristic of the foregoing method includes: sending the first MAC PDU to cancel the first buffer status report.

In an embodiment, benefits of the foregoing method include: reducing power consumption of UE.

In an embodiment, the benefits of the foregoing method include: avoiding a packet loss caused by a random access process.

In an embodiment, the benefits of the foregoing method include: avoiding a waste of an uplink resource.

In an embodiment, the benefits of the foregoing method include: avoiding scheduling of an uplink resource for the first buffer status report when there is no uplink transmission requirement.

According to an aspect of this application, the method includes:
triggering a first SR (Scheduling Request, scheduling request).

The first SR is triggered by the first buffer status report.

According to an aspect of this application, the method includes:
canceling the first SR in response to that one candidate condition in the first candidate condition set is satisfied.

According to an aspect of this application, the method includes:
sending the first SR; and starting a first timer in response to that the first SR is sent; or stopping the first timer in response to that one candidate condition in the first candidate condition set is satisfied.

A running status of the first timer is used to determine whether to send the first SR.

According to an aspect of this application, the method includes:
triggering a first random access process; or stopping the first random access process in response to that one candidate condition in the first candidate condition set is satisfied.

The first random access process is triggered by the first SR.

According to an aspect of this application, the first MAC PDU includes a first-type MAC CE, and the first-type MAC CE indicates the buffer status. The first-type MAC CE is indicated by a candidate LCID (Logical Channel ID, logical channel ID) in a first candidate LCID set, and the first candidate LCID set does not include any one of 59, 60, 61, or 62.

According to an aspect of this application, the first MAC PDU includes a second-type MAC CE, and the second-type MAC CE indicates the buffer status. The second-type MAC CE is indicated by a candidate LCID in a second candidate LCID set, and the second candidate LCID set includes at least one of 59, 60, 61, or 62.

According to an aspect of this application, the method includes:
a higher layer of the first node sends a first indication to a MAC sublayer of the first node; and the MAC sublayer of the first node receives the first indication.

The first indication is used to indicate that the first data packet set is discarded; and the first condition includes that the first indication is received.

According to an aspect of this application, a first RRC message is received. The first RRC message indicates first duration of the first timer.

This application discloses a method for a second node used for wireless communication. The method includes:
receiving a first MAC PDU.

A first buffer status report is triggered in response to that a first data packet set becomes available; or the first buffer status report is canceled in response to that any candidate condition in a first candidate condition set is satisfied. The first data packet set includes at least one data packet, and each data packet in the first data packet set is a data packet above a MAC sublayer. The first candidate condition set includes at least one of a first condition or a second condition. The first condition includes that the first data packet set is discarded. The second condition includes that the first MAC PDU is sent and the first buffer status report is generated before the first MAC PDU is assembled. The first MAC PDU indicates a buffer status.

In an embodiment, the first candidate condition set includes at least the first condition and the second condition.

In an embodiment, the first candidate condition set includes at least the first condition.

In an embodiment, the first candidate condition set includes at least the second condition.

According to an aspect of this application, a first SR is triggered. The first SR is triggered by the first buffer status report.

According to an aspect of this application, the first SR is canceled in response to that one candidate condition in the first candidate condition set is satisfied.

According to an aspect of this application, the method includes:
receiving the first SR.

A first timer is started in response to that the first SR is sent; or the first timer is stopped in response to that one candidate condition in the first candidate condition set is satisfied. A running status of the first timer is used to determine whether to send the first SR.

According to an aspect of this application, a first random access process is triggered; or the first random access process is stopped in response to that one candidate condition in the first candidate condition set is satisfied. The first random access process is triggered by the first SR.

According to an aspect of this application, the first MAC PDU includes a first-type MAC CE, and the first-type MAC CE indicates the buffer status. The first-type MAC CE is indicated by a candidate LCID in a first candidate LCID set, and the first candidate LCID set does not include any one of 59, 60, 61, or 62.

According to an aspect of this application, the first MAC PDU includes a second-type MAC CE, and the second-type MAC CE indicates the buffer status. The second-type MAC CE is indicated by a candidate LCID in a second candidate LCID set, and the second candidate LCID set includes at least one of 59, 60, 61, or 62.

According to an aspect of this application, a higher layer of a sender of the first MAC PDU sends a first indication to a MAC sublayer of the sender of the first MAC PDU. The MAC sublayer of the sender of the first MAC PDU receives the first indication. The first indication is used to indicate that the first data packet set is discarded. The first condition includes that the first indication is received.

According to an aspect of this application, a first RRC message is sent. The first RRC message indicates first duration of the first timer.

This application discloses a first node used for wireless communication. The first node includes:
a first processor, triggering a first buffer status report in response to that a first data packet set becomes available; or canceling the first buffer status report in response to that any candidate condition in a first candidate condition set is satisfied.

The first data packet set includes at least one data packet, and each data packet in the first data packet set is a data packet above a MAC sublayer. The first candidate condition set includes at least one of a first condition or a second condition. The first condition includes that the first data packet set is discarded. The second condition includes that a first MAC PDU is sent and the first buffer status report is generated before the first MAC PDU is assembled. The first MAC PDU indicates a buffer status.

In an embodiment, the first candidate condition set includes at least the first condition and the second condition.

In an embodiment, the first candidate condition set includes at least the first condition.

In an embodiment, the first candidate condition set includes at least the second condition.

This application discloses a second node used for wireless communication. The first node includes:
a second processor, receiving a first MAC PDU.

A first buffer status report is triggered in response to that a first data packet set becomes available; or the first buffer status report is canceled in response to that any candidate condition in a first candidate condition set is satisfied. The first data packet set includes at least one data packet, and each data packet in the first data packet set is a data packet above a MAC sublayer. The first candidate condition set includes at least one of a first condition or a second condition. The first condition includes that the first data packet set is discarded. The second condition includes that the first MAC PDU is sent and the first buffer status report is generated before the first MAC PDU is assembled. The first MAC PDU indicates a buffer status.

In an embodiment, the first candidate condition set includes at least the first condition and the second condition.

In an embodiment, the first candidate condition set includes at least the first condition.

In an embodiment, the first candidate condition set includes at least the second condition.

In an embodiment, in comparison with a conventional solution, this application has the following advantages:
- . the power consumption of the UE is reduced;
- . the packet loss caused by the random access process is avoided;
- . the waste of the uplink resource is avoided; and
- . scheduling of the uplink resource for the first buffer status report when there is no uplink transmission requirement is avoided.

### BRIEF DESCRIPTION OF THE DRAWINGS

Other features, objectives, and advantages of this application are more obvious by reading detailed descriptions of non-restrictive embodiments with reference to the accompanying drawings.
FIG. 1 is a flowchart of a first buffer status report according to an embodiment of this application;
FIG. 2 is a schematic diagram of a network architecture according to an embodiment of this application;
FIG. 3 is a schematic diagram of an embodiment of a radio protocol architecture of a user plane and a control plane according to an embodiment of this application;
FIG. 4 is a schematic diagram of a first communication device and a second communication device according to an embodiment of this application;
FIG. 5 is a flowchart of transmission of a wireless signal according to an embodiment of this application;
FIG. 6 is a schematic diagram of a first indication according to an embodiment of this application;
FIG. 7 is a schematic diagram in which a first MAC PDU includes a first-type MAC CE according to an embodiment of this application;
FIG. 8 is a schematic diagram in which a first MAC PDU includes a second-type MAC CE according to an embodiment of this application;
FIG. 9 is a structural block diagram of a processing apparatus for a first node according to an embodiment of this application;
FIG. 10 is a structural block diagram of a processing apparatus for a second node according to an embodiment of this application; and
FIG. 11 is a flowchart of transmission of a wireless signal according to another embodiment of this application.

### DETAILED DESCRIPTION

The technical solutions of this application are further described in detail with reference to the accompanying drawings below. It should be noted that embodiments and features in the embodiments of this application may be arbitrarily combined with each other without a conflict.

### Embodiment 1

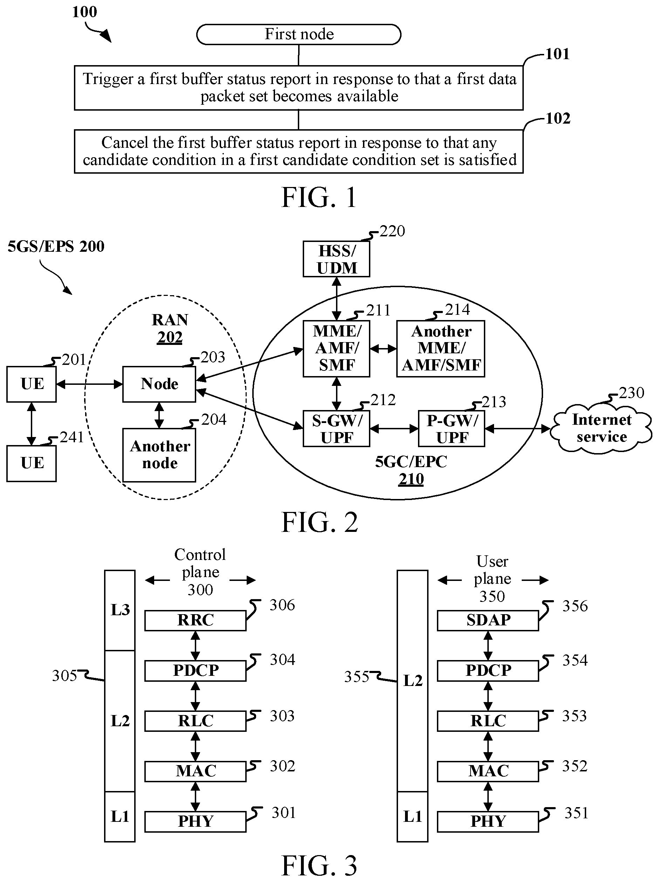

In Embodiment 1, for example, FIG. 1 is a flowchart of a first buffer status report according to an embodiment of this application. In FIG. 1, each box represents a step. It should be particularly noted that a sequence of the boxes in the figure does not represent a time sequence of the represented steps.

In Embodiment 1, in step 101, a first node in this application triggers a first buffer status report in response to that a first data packet set becomes available. In step 102, the first node cancels the first buffer status report in response to that any candidate condition in a first candidate condition set is satisfied. The first data packet set includes at least one data packet, and each data packet in the first data packet set is a data packet above a MAC sublayer. The first candidate condition set includes at least one of a first condition or a second condition. The first condition includes that the first data packet set is discarded. The second condition includes that a first MAC PDU is sent and the first buffer status report is generated before the first MAC PDU is assembled. The first MAC PDU indicates a buffer status.

In an embodiment, the first data packet set is a data packet set.

In an embodiment, the first data packet set is a PDU set.

In an embodiment, the first data packet set includes at least one data packet.

In an embodiment, the first data packet set includes at least two data packets.

In an embodiment, the first data packet set includes one or more data packets.

In an embodiment, the first data packet set includes a limited quantity of data packets.

In an embodiment, the first data packet set is associated with one PDCP entity.

In an embodiment, the first data packet set is associated with a plurality of PDCP entities.

In an embodiment, the first data packet set is not associated with a plurality of PDCP entities.

In an embodiment, the first data packet set is associated with only one DRB (Data Radio Bearer, data radio bearer).

In an embodiment, the first data packet set is associated with a plurality of DRBs.

In an embodiment, the first data packet set is associated with one or more DRBs.

In an embodiment, each data packet in the first data packet set is an uplink (Uplink) data packet.

In an embodiment, each data packet in the first data packet set is a backhaul-link (backhaul links) data packet.

In an embodiment, each data packet in the first data packet set is a sidelink (sidelink) data packet.

In this embodiment, at least one data packet in the first data packet set is a buffered data packet.

In this embodiment, each data packet in the first data packet set is a buffered data packet.

In this embodiment, at least one data packet in the first data packet set is an expected data packet.

In this embodiment, each data packet in the first data packet set is an expected data packet.

In an embodiment, all data packets in the first data packet set belong to a same LCG (Logical Channel Group, logical channel group).

In an embodiment, two data packets in the first data packet set belong to different LCGs.

In an embodiment, at least a part of bits of one data packet in the first data packet set are generated by an XR server.

In an embodiment, at least a part of bits of one data packet in the first data packet set are generated by an Edge server.

In an embodiment, at least a part of bits of one data packet in the first data packet set are generated by a core network device.

In an embodiment, at least a part of bits of one data packet in the first data packet set are generated by an access network device.

In an embodiment, one data packet in the first data packet set is a slice.

In an embodiment, one data packet in the first data packet set is a PDU (Protocol Data Unit, protocol data unit).

In an embodiment, one data packet in the first data packet set is a load of a PDU.

In an embodiment, one data packet in the first data packet set is a PDU of a Uu interface.

In an embodiment, one data packet in the first data packet set is a PDU of a PC5 interface.

In an embodiment, one data packet in the first data packet set is a PDU of an Xn interface.

In an embodiment, one data packet in the first data packet set is a PDU on a sidelink.

In an embodiment, one data packet in the first data packet set is a PDU above an SDAP (Service Data Adaptation Protocol, service data adaptation protocol) layer.

In an embodiment, one data packet in the first data packet set is a PDU above a MAC sublayer.

In an embodiment, one data packet in the first data packet set is a PDU at an application layer.

In an embodiment, one data packet in the first data packet set is a PDU at a non-access layer.

In an embodiment, one data packet in the first data packet set is an RLC PDU.

In an embodiment, one data packet in the first data packet set is a to-be-initially transmitted RLC data PDU.

In an embodiment, one data packet in the first data packet set is a to-be-retransmitted RLC data PDU for an RLC AM (Acknowledged Mode, acknowledged mode).

In an embodiment, one data packet in the first data packet set is a PDCP PDU.

In an embodiment, one data packet in the first data packet set is a PDCP data PDU.

In an embodiment, one data packet in the first data packet set is a to-be-retransmitted PDCP data PDU for an AM DRB.

In an embodiment, one data packet in the first data packet set is a PDCP control PDU.

In an embodiment, one data packet in the first data packet set is an SDAP PDU.

In an embodiment, one data packet in the first data packet set is an IP (Internet Protocal, Internet protocol) packet.

In an embodiment, one data packet in the first data packet set is a load of an IP packet.

In an embodiment, one data packet in the first data packet set is an IP PDU.

In an embodiment, one data packet in the first data packet set is an SDU.

In an embodiment, one data packet in the first data packet set is a load of an SDU.

In an embodiment, one data packet in the first data packet set is an SDU of a Uu interface.

In an embodiment, one data packet in the first data packet set is an SDU of a PC5 interface.

In an embodiment, one data packet in the first data packet set is an SDU of an Xn interface.

In an embodiment, one data packet in the first data packet set is an SDU on a sidelink.

In an embodiment, one data packet in the first data packet set is an SDU above an SDAP layer.

In an embodiment, one data packet in the first data packet set is a data packet at an SDAP sublayer.

In an embodiment, one data packet in the first data packet set is an SDU above a MAC sublayer.

In an embodiment, one data packet in the first data packet set is an SDU at an application layer.

In an embodiment, one data packet in the first data packet set is an SDU at a non-access layer.

In an embodiment, one data packet in the first data packet set is a data packet at an RLC sublayer.

In an embodiment, one data packet in the first data packet set is an RLC SDU.

In an embodiment, one data packet in the first data packet set is an RLC SDU segment (segment).

In an embodiment, one data packet in the first data packet set is a data packet at a PDCP sublayer.

In an embodiment, one data packet in the first data packet set is a PDCP PDU.

In an embodiment, one data packet in the first data packet set is a PDCP SDU.

In an embodiment, one data packet in the first data packet set is a to-be-retransmitted PDCP SDU for an AM DRB.

In an embodiment, one data packet in the first data packet set is an SDAP SDU.

In an embodiment, one data packet in the first data packet set is a to-be-retransmitted data packet.

In an embodiment, one data packet in the first data packet set is generated by a protocol entity in a user plane.

In an embodiment, one data packet in the first data packet set includes only data of a user plane.

In an embodiment, one data packet in the first data packet set uses a DRB.

In an embodiment, one data packet in the first data packet set is a PDU at a first protocol layer.

In an embodiment, one data packet in the first data packet set is packeted at the first protocol layer.

In an embodiment, an SDU included in one data packet in the first data packet set is encapsulated, at the first protocol layer, into a PDU at the first protocol layer.

In an embodiment, an SDU of one data packet in the first data packet set is encapsulated at the first protocol layer, and a protocol header is added to the SDU.

In an embodiment, all bits of one data packet in the first data packet set are generated at the first protocol layer.

In an embodiment, at least a packet header of one data packet in the first data packet set is generated at the first protocol layer.

In an embodiment, one data packet in the first data packet set is transmitted by using a DRB.

In an embodiment, one data packet in the first data packet set is mapped to a DRB.

In an embodiment, at least a part of bits of one data packet in the first data packet set are transmitted by using a DRB.

In an embodiment, all bits of one data packet in the first data packet set are transmitted by using a DRB.

In an embodiment, an SDU of one data packet in the first data packet set is a PDCP PDU.

In an embodiment, a transmission resource occupied by one data packet in the first data packet set includes a DRB.

In an embodiment, a transmission resource occupied by one data packet in the first data packet set is associated with a DRB.

In an embodiment, a domain of a packet header of one data packet in the first data packet set is a D/C domain.

In an embodiment, a domain of a packet header of one data packet in the first data packet set indicates that a type of any data packet in the first data packet set is data.

In an embodiment, each data packet in the first data packet set is generated by a PDCP sublayer.

In an embodiment, each data packet in the first data packet set is generated by a PDCP sublayer or an RLC sublayer.

In an embodiment, each data packet in the first data packet set is generated by an SDAP layer.

In an embodiment, each data packet in the first data packet set is generated by an IP layer.

In an embodiment, each data packet in the first data packet set is generated by a transport layer.

In an embodiment, each data packet in the first data packet set is generated by an application layer.

In an embodiment, each data packet in the first data packet set is generated by a transport network layer.

In an embodiment, each data packet in the first data packet set is generated by a network layer.

In an embodiment, each data packet in the first data packet set belongs to one of a PDCP sublayer or an RLC sublayer.

In an embodiment, each data packet in the first data packet set belongs to a PDCP sublayer.

In an embodiment, each data packet in the first data packet set belongs to an RLC sublayer.

In an embodiment, an SDU of each data packet in the first data packet set is transmitted by using a DRB.

In an embodiment, each data packet in the first data packet set is transmitted by using a DRB.

In an embodiment, each data packet in the first data packet set is mapped to a DRB.

In an embodiment, any data packet in the first data packet set does not include a PDU of a control plane.

In an embodiment, any data packet in the first data packet set does not include control signaling.

In an embodiment, any data packet in the first data packet set does not include RRC signaling.

In an embodiment, any data packet in the first data packet set is not a control PDU.

In an embodiment, an SDU of any data packet in the first data packet set is not transmitted by using an SRB (Signaling Radio Bearer, Signaling Radio Bearer).

In an embodiment, any two data packets in the first data packet set have a dependency relationship.

In an embodiment, any two data packets in the first data packet set are mapped to a same logical channel.

In an embodiment, two data packets in the first data packet set are mapped to different LCGs.

In an embodiment, any two data packets in the first data packet set are mapped to a same LCG.

In an embodiment, any two data packets in the first data packet set belong to a same LCG.

In an embodiment, any two data packets in the first data packet set belong to a same LCH of a same LCG.

In an embodiment, any two data packets in the first data packet set belong to different LCHs of a same LCG.

In an embodiment, any two data packets in the first data packet set belong to different LCGs.

In an embodiment, any two data packets in the first data packet set belong to a same service.

In an embodiment, any two data packets in the first data packet set belong to a same PDU session.

In an embodiment, any two data packets in the first data packet set are generated by a same protocol entity.

In an embodiment, DRBs respectively used by any two data packets in the first data packet set have an association relationship.

In an embodiment, a DRB used by one data packet in the first data packet set is a DRB of an MCG (Master Cell Group, master cell group), and a DRB used by another data packet in the first data packet set is a DRB of an SCG (Secondary Cell Group, secondary cell group).

In an embodiment, a DRB used by at least one data packet in the first data packet set is a split (split) DRB.

In an embodiment, DRBs used by any two data packets in the first data packet set are DRBs of an MCG.

In an embodiment, DRBs used by any two data packets in the first data packet set are DRBs of an SCG.

In an embodiment, DRBs used by any two data packets in the first data packet set are the same.

In an embodiment, DRBs used by two data packets in the first data packet set are different.

In an embodiment, DRB IDs used by two data packets in the first data packet set are different.

In an embodiment, any two data packets in the first data packet set are associated with a same QoS flow (flow).

In an embodiment, packet headers of any two data packets in the first data packet set are different.

In an embodiment, sequence (Sequence) numbers of any two data packets in the first data packet set are different.

In an embodiment, logical channels occupied by any two data packets in the first data packet set are different.

In an embodiment, logical channels occupied by any two data packets in the first data packet set are the same.

In an embodiment, any two data packets in the first data packet set are processed by a same MAC entity.

In an embodiment, any two data packets in the first data packet set are processed by different MAC entities.

In an embodiment, at least a part of bits of any two data packets in the first data packet set are different.

In an embodiment, sizes of any two data packets in the first data packet set are different.

In an embodiment, SDUs of any two data packets in the first data packet set are different.

In an embodiment, protocol headers or subheaders of any two data packets in the first data packet set are different.

In an embodiment, at least one domain or field in protocol headers of any two data packets in the first data packet set is different.

In an embodiment, any two data packets in the first data packet set are PDUs of a user plane.

In an embodiment, any two data packets in the first data packet set are generated by a protocol layer of a user plane.

In an embodiment, two data packets in the first data packet set are associated with different QoS flows.

In an embodiment, packet headers of two data packets in the first data packet set are the same.

In an embodiment, sequence numbers of two data packets in the first data packet set are the same.

In an embodiment, sizes of two data packets in the first data packet set are the same.

In an embodiment, two data packets in the first data packet set are mapped to different logical channels.

In an embodiment, two data packets in the first data packet set are generated by different protocol entities.

In an embodiment, any two data packets in the first data packet set are generated by a same protocol entity.

In an embodiment, each data packet in the first data packet set uses a relay.

In an embodiment, any data packet in the first data packet set does not use a relay.

In an embodiment, a DRB used by one data packet in the first data packet set does not use a relay, and a DRB used by another data packet in the first data packet set uses a relay.

In an embodiment, each data packet in the first data packet set corresponds to a first identifier.

In an embodiment, a first identifier is configured for each data packet in the first data packet set.

In an embodiment, a first identifier is indicated to each data packet in the first data packet set.

In an embodiment, each data packet in the first data packet set is marked with a first identifier.

In an embodiment, the first identifier indicates one DRB.

In an embodiment, the first identifier indicates one PDU set.

In an embodiment, the first identifier indicates one PDCP set.

In an embodiment, the first identifier indicates one QoS flow.

In an embodiment, the first identifier indicates a group of data packets.

In an embodiment, the first identifier indicates at least one data packet.

In an embodiment, the first identifier indicates a data packet set.

In an embodiment, the first identifier indicates at least one data packet set.

In an embodiment, the first identifier is configured at a PDCP sublayer.

In an embodiment, the first identifier is configured at a layer higher than a PDCP sublayer.

In an embodiment, the first identifier is used to identify a group of PDUs.

In an embodiment, the first identifier is used to determine a PDU set.

In an embodiment, the first identifier is associated with at least one LCG.

In an embodiment, the first identifier is associated with a plurality of LCGs.

In an embodiment, the first identifier is associated with one LCG.

In an embodiment, the first identifier includes at least one DRB ID.

In an embodiment, the first identifier is associated with a plurality of DRBs.

In an embodiment, the first identifier is associated with one DRB.

In an embodiment, the first identifier includes one or more PDCP SNs.

In an embodiment, the first identifier includes one or more PDCP COUNTs.

In an embodiment, the first identifier includes a QoS flow ID.

In an embodiment, the first identifier includes a PDU session ID.

In an embodiment, the first identifier is an integer.

In an embodiment, the first identifier is a time interval.

In an embodiment, the first identifier is a display identifier.

In an embodiment, the first identifier is a PDU set ID.

In an embodiment, the first identifier is a DRB ID.

In an embodiment, data packets in a data packet set have a dependency relationship.

In an embodiment, that data packets in a data packet set have a dependency relationship includes: any two data packets in the data packet set have a dependency relationship.

In an embodiment, that data packets in a data packet set have a dependency relationship includes: any data packet in the data packet set depends on at least one data packet other than the data packet in the data packet set.

In an embodiment, that data packets in a data packet set have a dependency relationship includes: decoding of any data packet in the data packet set depends on at least one data packet other than the data packet in the data packet set.

In an embodiment, that data packets in a data packet set have a dependency relationship includes: a picture of any data packet in the data packet set depends on at least one data packet other than the data packet in the data packet set.

In an embodiment, that data packets in a data packet set have a dependency relationship includes: QoS of any data packet in the data packet set depends on at least one data packet other than the data packet in the data packet set.

In an embodiment, that data packets in a data packet set have a dependency relationship includes: all data packets in the data packet set are used to construct a same picture.

In an embodiment, that data packets in a data packet set have a dependency relationship includes: all data packets in the data packet set belong to a same QoS flow.

In an embodiment, that data packets in a data packet set have a dependency relationship includes: there is a delay requirement for all data packets in the data packet set.

In an embodiment, that data packets in a data packet set have a dependency relationship includes: delay budgets for all data packets in the data packet set cannot exceed a threshold.

In an embodiment, a type of any data packet in a data packet set is a data-packet type in a first candidate data-packet type set.

In a sub embodiment of this embodiment, one data-packet type in the first candidate data-packet type set is a PDCP SDU.

In a sub embodiment of this embodiment, one data-packet type in the first candidate data-packet type set is a PDCP data PDU.

In a sub embodiment of this embodiment, one data-packet type in the first candidate data-packet type set is a PDCP control PDU.

In a sub embodiment of this embodiment, one data-packet type in the first candidate data-packet type set is a to-be-retransmitted PDCP SDU for an AM DRB.

In a sub embodiment of this embodiment, one data-packet type in the first candidate data-packet type set is a to-be-retransmitted PDCP data PDU for an AM DRB.

In a sub embodiment of this embodiment, one data-packet type in the first candidate data-packet type set is an RLC SDU.

In a sub embodiment of this embodiment, one data-packet type in the first candidate data-packet type set is an RLC SDU segment (segment).

In a sub embodiment of this embodiment, one data-packet type in the first candidate data-packet type set is a to-be-initially transmitted RLC data PDU.

In a sub embodiment of this embodiment, one data-packet type in the first candidate data-packet type set is a to-be-retransmitted RLC data PDU for an RLC AM.

In a sub embodiment of this embodiment, one data-packet type in the first candidate data-packet type set includes at least one of a PDCP SDU, a PDCP data PDU, a PDCP control PDU, a to-be-retransmitted PDCP SDU for an AM DRB, a to-be-retransmitted PDCP data PDU for an AM DRB, an RLC SDU, an RLC SDU segment, a to-be-initially transmitted RLC data PDU, or a to-be-retransmitted RLC data PDU for an RLC AM.

In an embodiment, being available includes: becoming available (becomes available).

In an embodiment, being available includes: being available to a first MAC entity.

In an embodiment, being available includes: becomes available to the MAC entity.

In an embodiment, the phrase "in response to that a first data packet set becomes available" includes: in response to that at least the first data packet set becomes available.

In an embodiment, the phrase "in response to that a first data packet set becomes available" includes: in response to that at least the first data packet set becomes available to a first MAC entity (becomes available to the MAC entity).

In an embodiment, the phrase "in response to that a first data packet set becomes available" includes: in response to that at least one data packet in the first data packet set becomes available.

In an embodiment, the phrase "in response to that a first data packet set becomes available" includes: in response to that each data packet in the first data packet set becomes available.

In an embodiment, the phrase "in response to that a first data packet set becomes available" includes: in response to that any data packet in the first data packet set becomes available.

In an embodiment, the first MAC entity of the first node U01 triggers the first buffer status report.

In an embodiment, that a first data packet set becomes available is used to trigger the first buffer status report.

In an embodiment, if uplink data does not include a data packet in any data packet set, the first buffer status report is not triggered.

In an embodiment, the first buffer status report is triggered only when at least uplink data includes a data packet in a data packet set.

In an embodiment, the triggering includes trigger.

In an embodiment, the triggering does not include sending.

In an embodiment, the behavior of triggering the first buffer status report includes triggering a BSR.

In an embodiment, the behavior of triggering the first buffer status report includes triggering a BSR for a data packet set.

In an embodiment, the first buffer status report is a regular BSR (Regular BSR).

In an embodiment, the first buffer status report is a padding BSR (Padding BSR).

In an embodiment, the first buffer status report is a periodic BSR (Periodic BSR).

In an embodiment, the first buffer status report is neither a padding BSR nor a periodic BSR.

In an embodiment, the first buffer status report is not in any BSR format introduced in the 3GPP R17 or before the 3GPP R17.

In a sub embodiment of this embodiment, the first buffer status report is none of a regular BSR, a padding BSR, or a periodic BSR.

In a sub embodiment of this embodiment, the first buffer status report is in a BSR format introduced in the 3GPP R18 or after the 3GPP R18.

In a sub embodiment of this embodiment, the first buffer status report is an enhanced (enhanced) BSR.

In a sub embodiment of this embodiment, the first buffer status report is a BSR for XR.

In a sub embodiment of this embodiment, the first buffer status report is a BSR for a PDU set.

In a sub embodiment of this embodiment, for the first buffer status report, a first-type MAC CE can be used to indicate the buffer status.

In a sub embodiment of this embodiment, for the first buffer status report, a second-type MAC CE can be used to indicate the buffer status.

In a sub embodiment of this embodiment, for the first buffer status report, a second-type MAC CE cannot be used to indicate the buffer status.

In an embodiment, the first buffer status report is for at least the first data packet set.

In an embodiment, the first buffer status report is for at least an LCH to which the first data packet set belongs.

In an embodiment, the first buffer status report is for at least an LCG to which an LCH to which the first data packet set belongs belongs.

In an embodiment, the first buffer status report is for only the first data packet set.

In an embodiment, the first buffer status report is for only an LCH to which the first data packet set belongs.

In an embodiment, the first buffer status report is for only an LCG to which an LCH to which the first data packet set belongs belongs.

In an embodiment, the first MAC entity of the first node U01 cancels the first buffer status report.

In an embodiment, the first buffer status report is canceled when any candidate condition in the first candidate condition set is satisfied.

In an embodiment, the first buffer status report is canceled provided that any candidate condition in the first candidate condition set is satisfied.

In an embodiment, the first buffer status report is canceled when the first condition is satisfied.

In an embodiment, the first buffer status report is canceled when the second condition is satisfied.

In an embodiment, the first buffer status report is canceled when both the first condition and the second condition are satisfied.

In an embodiment, the first buffer status report is used to report the buffer status.

In an embodiment, the first buffer status report is used to report a data amount of at least the first data packet set.

In an embodiment, the first buffer status report is used to report a data amount of the first data packet set.

In an embodiment, the first buffer status report is used to report a data amount.

In an embodiment, the first buffer status report is used to report an amount of buffered data.

In an embodiment, the first buffer status report is used to report the first-type MAC CE.

In an embodiment, the first buffer status report is used to report a data amount for one LCG.

In an embodiment, the first buffer status report is used to report a data amount for a plurality of LCGs.

In an embodiment, the first buffer status report is used to report a data amount for a PDU set in one LCG.

In an embodiment, the first buffer status report is used to report a data amount for one PDU set.

In an embodiment, the first buffer status report is used to report a data amount for at least one PDU set.

In an embodiment, the first candidate condition set includes at least the first condition and the second condition.

In an embodiment, the first candidate condition set includes at least the first condition.

In an embodiment, the first candidate condition set includes at least the second condition.

In an embodiment, the first candidate condition set includes only the first condition and the second condition.

In an embodiment, the first candidate time set includes a third condition.

In an embodiment, the third condition includes that at least one uplink grant (UL grant) can accommodate all to-be-processed data that can be used for transmission, but is insufficient to accommodate one BSR MAC CE and a subheader (subheader) of the BSR MAC CE.

In an embodiment, the in response to that the first condition is satisfied includes: when the first data packet set is discarded.

In an embodiment, the in response to that the first condition is satisfied includes: when it is determined to discard the first data packet set.

In an embodiment, the in response to that the first condition is satisfied includes: before the first data packet set is discarded.

In an embodiment, the in response to that the first condition is satisfied includes: after the first data packet set is discarded.

In an embodiment, the first condition is related to that at least the first data packet set is discarded.

In an embodiment, the first condition includes that at least the first data packet set is discarded.

In an embodiment, the first condition includes that the first data packet set is discarded, and any uplink data other than the first data packet set does not exist.

In an embodiment, the first condition includes that the first data packet set is discarded, and the first buffer status report triggered by a data packet set other than the first data packet set does not exist.

In an embodiment, the first condition includes that the first data packet set is discarded, and an LCH to which the first data packet set belongs does not include any uplink data other than the first data packet set.

In an embodiment, the first condition includes that the first data packet set is discarded, and the first buffer status report triggered by a data packet set other than an LCH to which the first data packet set belongs does not exist.

In an embodiment, the first condition includes that the first data packet set is discarded, and an LCG to which the first data packet set belongs does not include any uplink data other than the first data packet set.

In an embodiment, the first condition includes that the first data packet set is discarded, and the first buffer status report triggered by a data packet set other than an LCG to which the first data packet set belongs does not exist.

In an embodiment, the assembling is assembling at a MAC sublayer.

In an embodiment, the assembling includes multiplexing (multiplexing).

In an embodiment, the assembling includes forming.

In an embodiment, the assembling includes assembling according to the section 5.4.3.1 and the section 6.1.2 of the 3GPP TS38.321.

In an embodiment, the assembling is Multiplexing and assembly entity assembling.

In an embodiment, the phase "a first MAC PDU is sent" includes: the first MAC PDU is sent at a physical layer.

In an embodiment, the phase "a first MAC PDU is sent" includes: a MAC sublayer indicates a physical layer to send the first MAC PDU.

In an embodiment, the phase "a first MAC PDU is sent" includes: a MAC sublayer indicates a physical layer to generate sending for the first MAC PDU.

In an embodiment, the second condition includes that the first MAC PDU is sent and the first buffer status report is generated before the first MAC PDU is assembled, and the first MAC PDU includes a buffer status until (and including) the first buffer status report is triggered for the last time.

In an embodiment, the second condition includes that the first MAC PDU is sent and the first buffer status report is generated before the first MAC PDU is assembled, and the first MAC PDU includes the first-type MAC CE.

In an embodiment, the second condition includes that the first MAC PDU is sent and the first buffer status report is generated before the first MAC PDU is assembled, the first MAC PDU includes the first-type MAC CE, and the first-type MAC CE includes a buffer status until (and including) the first buffer status report is triggered for the last time.

In an embodiment, the second condition includes that the first MAC PDU is sent and the first buffer status report is generated before the first MAC PDU is assembled, and the first MAC PDU includes the second-type MAC CE.

In an embodiment, the second condition includes that the first MAC PDU is sent and the first buffer status report is generated before the first MAC PDU is assembled, the first MAC PDU includes the second-type MAC CE, and the second-type MAC CE includes a buffer status until (and including) the first buffer status report is triggered for the last time.

In an embodiment, the first-type MAC CE in the first MAC PDU indicates the buffer status.

In an embodiment, the second-type MAC CE in the first MAC PDU indicates the buffer status.

In an embodiment, a buffer size field (Buffer Size field) in the first MAC PDU indicates the buffer status, and the buffer status is a buffer size (Buffer Size).

In an embodiment, the buffer status is determined at at least one of a PDCP sublayer or an RLC sublayer.

In an embodiment, at least one of a PDCP sublayer or an RLC sublayer indicates the buffer status to a MAC sublayer.

In an embodiment, at least one of a PDCP sublayer or an RLC sublayer indicates the buffer status to a MAC sublayer.

In an embodiment, the buffer status indicates a total amount of available data.

In an embodiment, the buffer status indicates a total amount of available data of all logical channels in one LCG.

In an embodiment, the buffer status indicates a total amount of available data of one PDU set.

In an embodiment, the buffer status indicates a total amount of available data of the first data packet set.

In an embodiment, the buffer status indicates a total amount of available data of at least the first data packet set.

In an embodiment, the buffer status indicates a total amount of available data of an LCG to which an LCH to which available data of at least the first data packet set belongs belongs.

In an embodiment, the buffer status indicates a total amount of available data of an LCG to which an LCH to which at least the first data packet set belongs belongs.

In an embodiment, the buffer status indicates a total amount of available data of an LCH to which at least the first data packet set belongs.

In an embodiment, the buffer status indicates only a total amount of available data of an LCH to which the first data packet set belongs.

In an embodiment, the first MAC entity is associated with an MCG of the first node.

In an embodiment, the first MAC entity is associated with an SCG of the first node.

In an embodiment, the first MAC entity is associated with a sidelink of the first node.

### Embodiment 2

In Embodiment 2, for example, FIG. 2 is a schematic diagram of a network architecture according to an embodiment of this application. In FIG. 2, a network architecture 200 of a 5G NR (New Radio, new radio)/LTE (Long-Term Evolution, long term evolution)/LTE-A (Long-Term Evolution Advanced, long term evolution advanced) system. The 5G NR/LTE/LTE-A network architecture 200 may be referred to as a 5GS (5G System)/EPS (Evolved Packet System, evolved packet system) 200 or another suitable term. The 5GS/EPS 200 includes at least one of UE (User Equipment, user equipment) 201, an RAN (radio access network) 202, a 5GC (5G Core Network, 5G core network)/EPC (Evolved Packet Core, evolved packet core) 210, an HSS (Home Subscriber Server, home subscriber server)/UDM (Unified Data Management, unified data management) 220, and an Internet service 230. The 5GS/EPS may be interconnected to another access network, but for simplicity, these entities/interfaces are not shown. As shown in the figure, the 5GS/EPS provides a packet switching service. However, a person skilled in the art easily understands that various concepts presented throughout this application may be extended to a network providing a circuit switching service or another cellular network. The RAN includes a node 203 and another node 204. The node 203 provides protocol termination on a user plane and a control plane toward the UE 201. The node 203 may be connected to another node 204 through an Xn interface (for example, a backhaul)/X2 interface. The node 203 may also be referred to as a base station, a base transceiver station, a radio base station, a radio transceiver, a transceiver function, a basic service set (BSS), an extended service set (ESS), a TRP (transmission reception node), or another suitable term. The node 203 provides, for the UE 201, an access point to the 5GC/EPC 210. An example of the UE 201 includes a cellular phone, a smartphone, a session initiation protocol (SIP) phone, a laptop computer, a personal digital assistant (PDA), satellite radio, non-ground base station communication, satellite mobile communication, a global positioning system, a multimedia apparatus, a video apparatus, a digital audio player (for example, an MP3 player), a camera, a game console, an unmanned aerial vehicle, an aircraft, a narrow band Internet of things device, a machine type communication device, a land vehicle, an automobile, a wearable device, or any other similar functional apparatus. A person skilled in the art may alternatively refer to the UE 201 as a mobile station, a subscriber station, a mobile unit, a subscriber unit, a radio unit, a remote unit, a mobile apparatus, a wireless apparatus, a wireless communication apparatus, a remote apparatus, a mobile subscriber station, an access terminal, a mobile terminal, a wireless terminal, a remote terminal, a handheld machine, a user agent, a mobile client, a client, or another suitable term. The node 203 is connected to the 5GC/EPC 210 through an S1/NG interface. The 5GC/EPC 210 includes an MME (Mobility Management Entity, mobility management entity)/AMF (Authentication Management Field, authentication management field)/SMF (Session Management Function, Session Management Function, session management function) 211, another MME/AMF/SMF 214, an S-GW (Service Gateway, service gateway)/a UPF (User Plane Function, user plane function) 212, and a P-GW (Packet Date Network Gateway, packet date network gateway)/UPF 213. The MME/AMF/SMF 211 is a control node that processes signaling between the UE 201 and the 5GC/EPC 210. Generally, the MME/AMF/SMF 211 provides bearer and connection management. All user IP (Internet Protocal, Internet protocol) packets are transferred by using the S-GW/UPF 212, and the S-GW/UPF 212 is connected to the P-GW/UPF 213. The P-GW provides, for the UE, IP address assignment and another function. The P-GW/UPF 213 is connected to the Internet service 230. The Internet service 230 includes an Internet protocol service corresponding to an operator, and may specifically include the Internet, an Intranet, an IMS (IP Multimedia Subsystem, IP multimedia subsystem), and a packet switching streaming service.

In an embodiment, the UE 201 corresponds to the first node in this application.

In an embodiment, the UE 201 is user equipment (User Equipment, UE).

In an embodiment, the UE 201 is a base station device (BaseStation, BS).

In an embodiment, the UE 201 is a relay device.

In an embodiment, the node 203 corresponds to the second node in this application.

In an embodiment, the node 203 is a base station device.

In an embodiment, the node 203 is user equipment.

In an embodiment, the node 203 is a relay device.

In an embodiment, the node 203 is a gateway (Gateway).

In an embodiment, the user equipment supports transmission in a terrestrial network (Non-Terrestrial Network, NTN).

In an embodiment, the user equipment supports transmission in a non-terrestrial network (Terrestrial Network, terrestrial network).

In an embodiment, the user equipment supports transmission in a network with a large delay difference.

**In** an embodiment, the user equipment supports dual connection (Dual Connection, DC) transmission.

**In** an embodiment, the user equipment includes a handheld terminal.

**In** an embodiment, the user equipment includes a wearable device.

**In** an embodiment, the user equipment includes an aircraft.

**In** an embodiment, the user equipment includes a vehicle-mounted terminal.

**In** an embodiment, the user equipment includes a watercraft.

**In** an embodiment, the user equipment includes an Internet of things terminal.

**In** an embodiment, the user equipment includes a terminal of the industrial Internet of things.

**In** an embodiment, the user equipment includes a device supporting low-delay high-reliability transmission.

In an embodiment, the user equipment includes a test device.

In an embodiment, the user equipment includes a signaling tester.

In an embodiment, the base station device includes a base transceiver station (Base Transceiver Station, BTS).

In an embodiment, the base station device includes a NodeB (NodeB, NB).

In an embodiment, the base station device includes a gNB.

In an embodiment, the base station device includes an eNB.

In an embodiment, the base station device includes an ng-eNB.

In an embodiment, the base station device includes an en-gNB.

In an embodiment, the base station device supports transmission in a non-terrestrial network.

In an embodiment, the base station device supports transmission in a network with a large delay difference.

In an embodiment, the base station device supports transmission in a terrestrial network.

In an embodiment, the base station device includes a marco cellular (Marco Cellular) base station.

In an embodiment, the base station device includes a micro cell (Micro Cell) base station.

In an embodiment, the base station device includes a pico cell (Pico Cell) base station.

In an embodiment, the base station device includes a femtocell (Femtocell).

In an embodiment, the base station device includes a base station device supporting a large delay difference.

In an embodiment, the base station device includes a device in a flight platform.

In an embodiment, the base station device includes a satellite device.

In an embodiment, the base station device includes a TRP (Transmitter Receiver Point, transmission reception node).

In an embodiment, the base station device includes a CU (Centralized Unit, centralized unit).

In an embodiment, the base station device includes a DU (Distributed Unit, distributed unit).

In an embodiment, the base station device includes a test device.

In an embodiment, the base station device includes a signaling tester.

In an embodiment, the base station device includes an IAB (Integrated Access and Backhaul)-node.

In an embodiment, the base station device includes an IAB-donor.

In an embodiment, the base station device includes an IAB-donor-CU.

In an embodiment, the base station device includes an IAB-donor-DU.

In an embodiment, the base station device includes an IAB-DU.

In an embodiment, the base station device includes an IAB-MT.

In an embodiment, the relay device includes a relay.

In an embodiment, the relay device includes an L3 relay.

In an embodiment, the relay device includes an L2 relay.

In an embodiment, the relay device includes a router.

In an embodiment, the relay device includes a switch.

In an embodiment, the relay device includes user equipment.

In an embodiment, the relay device includes a base station device.

### Embodiment 3

In Embodiment 3, FIG. 3 is a schematic diagram of an embodiment of a radio protocol architecture of a user plane and a control plane according to this application. FIG. 3 is a schematic diagram for describing an embodiment of a radio protocol architecture of a user plane 350 and a control plane 300. FIG. 3 presents the radio protocol architecture used in the control plane 300 by using three layers: a layer 1, a layer 2, and a layer 3. The layer 1 (a layer L1) is a lowest layer and implements various PHY (physical layer) signal processing functions. The layer L1 is referred to as a PHY 301 in this specification. The layer 2 (a layer L2) 305 is above the PHY 301, and includes a MAC (Medium Access Control, media access control) sublayer 302, an RLC (Radio Link Control, radio link control) sublayer 303, and a PDCP (Packet Data Convergence Protocol, packet data convergence protocol) sublayer 304. The PDCP sublayer 304 provides multiplexing between different radio bearers and logical channels. The PDCP sublayer 304 further provides security by encrypting a data packet, and provides mobility support across regions. The RLC sublayer 303 provides segmentation and reassembly of an upper-layer data packet, retransmission of a lost data packet, and rearrangement of data packets, to compensate for unordered reception caused by a HARQ (Hybrid Automatic Repeat Request, hybrid automatic repeat request). The MAC sublayer 302 provides multiplexing between a logical channel and a transmission channel. The MAC sublayer 302 is further responsible for allocating various radio resources (for example, resource blocks) in a cell. The MAC sublayer 302 is further responsible for a HARQ operation. An RRC (Radio Resource Control, radio resource control) sublayer 306 in the layer 3 (a layer L3) in the control plane 300 is responsible for obtaining a radio resource (that is, a radio bearer) and configuring a lower layer by using RRC signaling. The radio protocol architecture in the user plane 350 includes the layer 1 (the layer L1) and the layer 2 (the layer L2). For the physical layer 351, the PDCP sublayer 354 in the layer L2 355, the RLC sublayer 353 in the layer L2 355, and the MAC sublayer 352 in the layer L2 355, the radio protocol architecture in the user plane 350 is substantially the same as that in corresponding layers and sublayers in the control plane 300, but the PDCP sublayer 354 further provides header compression for an upper-layer data packet, to reduce radio transmission overheads The layer L2 355 in the user plane 350 further includes an SDAP (Service Data Adaptation Protocol, service data adaptation protocol) sublayer 356. The SDAP sublayer 356 is responsible for mapping between a QoS flow and a data radio bearer (DRB, Data Radio Bearer), to support diversity of services.

In an embodiment, the radio protocol architecture in FIG. 3 is applicable to the first node in this application.

In an embodiment, the radio protocol architecture in FIG. 3 is applicable to the second node in this application.

In an embodiment, the first buffer status report in this application is generated in the MAC 302 or the MAC 352.

In an embodiment, the first MAC PDU in this application is generated in the MAC 302 or the MAC 352.

In an embodiment, the first SR in this application is generated in the PHY 301 or the PHY 351.

In an embodiment, the first-type MAC CE in this application is generated in the MAC 302 or the MAC 352.

In an embodiment, the second-type MAC CE in this application is generated in the MAC 302 or the MAC 352.

In an embodiment, the first indication in this application is generated at a higher layer.

In an embodiment, the first indication in this application is generated in the SDAP 356.

In an embodiment, the first indication in this application is generated in the RLC 303 or the RLC 353.

In an embodiment, the first indication in this application is generated in the PDCP 304 or the PDCP 354.

### Embodiment 4

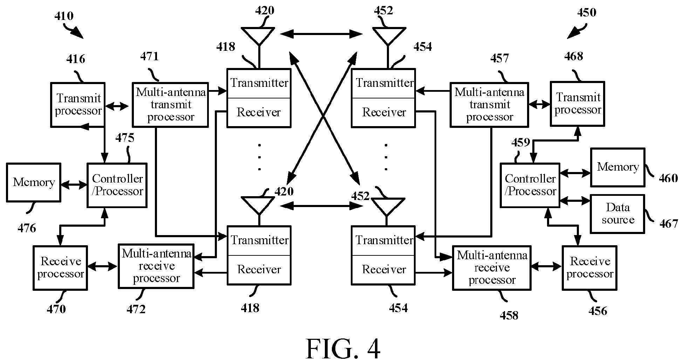

In Embodiment 4, FIG. 4 is a schematic diagram of a first communication device and a second communication device according to this application. FIG. 4 is a block diagram of a first communication device 450 and a second communication device 410 communicating with each other in an access network.

The first communication device 450 includes a controller/processor 459, a memory 460, a data source 467, a transmit processor 468, a receive processor 456, a multi-antenna transmit processor 457, a multi-antenna receive processor 458, a transmitter/receiver 454, and an antenna 452.

The second communication device 410 includes a controller/processor 475, a memory 476, a receive processor 470, a transmit processor 416, a multi-antenna receive processor 472, a multi-antenna transmit processor 471, a transmitter/receiver 418, and an antenna 420.

During transmission from the second communication device 410 to the first communication device 450, at the second communication device 410, an upper-layer data packet from a core network is provided to the controller/processor 475. The controller/processor 475 implements functionality of the layer L2. During the transmission from the second communication device 410 to the first communication device 450, the controller/processor 475 provides header compression, encryption, packet segmentation and rearrangement, multiplexing between a logical channel and a transport channel, and radio resource allocation to the first communication device 450 based on various priority mensuration. The controller/processor 475 is further responsible for retransmission of a lost packet and for signaling to the first communication device 450. The transmit processor 416 and the multi-antenna transmit processor 471 implement various signal processing functions at the layer L1 (that is, the physical layer). The transmit processor 416 implements encoding and interleaving to promote forward error correction (FEC) at the second communication device 410, and mapping of a signal cluster based on various modulation schemes (for example, binary phase-shift keying (BPSK), quadrature phase-shift keying (QPSK), M-phase-shift keying (M-PSK), and M-quadrature amplitude modulation (M-QAM)). The multi-antenna transmit processor 471 performs digital space precoding on an encoded and modulated symbol, including codebook-based precoding and non-codebook-based precoding, and beamforming processing, to generate one or more spatial streams. Then, the transmit processor 416 maps each spatial stream to a sub-carrier, performs multiplexing with a reference signal (such as a pilot) in time domain and/or frequency domain, and uses inverse fast Fourier transform (IFFT) to generate a physical channel carrying a time-domain multi-carrier symbol stream. Then, the multi-antenna transmit processor 471 performs, on the time-domain multi-carrier symbol stream, an operation of sending analog precoding/beamforming. Each transmitter 418 converts a baseband multi-carrier symbol stream provided by the multi-antenna transmit processor 471 into a radio frequency stream, and then provides the radio frequency stream to different antennas 420.

During the transmission from the second communication device 410 to the first communication device 450, at the first communication device 450, each receiver 454 receives a signal by using a corresponding antenna 452 thereof. Each receiver 454 restores information modulated onto a radio frequency carrier, converts the radio frequency stream into a baseband multi-carrier symbol stream, and provides the baseband multi-carrier symbol stream to the receive processor 456. The receive processor 456 and the multi-antenna receive processor 458 implement various signal processing functions at the layer L1. The multi-antenna receive processor 458 performs, on the baseband multi-carrier symbol stream from the receiver 454, an operation of receiving the analog precoding/beamforming. The receive processor 456 converts, from time domain to frequency domain by using fast Fourier transform (FFT), the baseband multi-carrier symbol stream on which the operation of receiving the analog precoding/beamforming is performed. In frequency domain, a data signal and a reference signal at the physical layer are demultiplexed by the receive processor 456. The reference signal is used for channel estimation. After multi-antenna detection is performed on the data signal in the multi-antenna receive processor 458, any spatial stream that uses the first communication device 450 as a destination is restored. A symbol in each spatial stream is demodulated and restored in the receive processor 456, and a soft decision is generated. Then, the receive processor 456 decodes and deinterleaves the soft decision to restore upper-layer data and a control signal that are transmitted by the second communication device 410 on a physical channel. Then, the upper-layer data and the control signal are provided to the controller/processor 459. The controller/processor 459 implements a function of the layer L2. The controller/processor 459 may be associated with the memory 460 that stores program code and data. The memory 460 may be referred to as a computer-readable medium. During the transmission from the second communication device 410 to the second communication device 450, the controller/processor 459 provides demultiplexing between a transport channel and a logical channel, packet reassembly, decryption, header decompression, and control signal processing, to restore the upper-layer data packet from the core network. Then, the upper-layer data packet is provided to all protocol layers above the layer L2. Alternatively, various control signals may be provided to L3 for processing at L3.

During transmission from the first communication device 450 to the second communication device 410, at the first communication device 450, the data source 467 is used to provide an upper-layer data packet to the controller/processor 459. The data source 467 represents all protocol layers above the layer L2. Similar to the sending function that is at the second communication device 410 and that is described in the transmission from the second communication device 410 to the first communication device 450, the controller/processor 459 implements header compression, encryption, packet segmentation and rearrangement, and multiplexing between a logical channel and a transport channel based on radio resource allocation, to implement a function of the layer L2 in the user plane and the control plane. The controller/processor 459 is further responsible for retransmission of a lost packet and for signaling to the second communication device 410. The transmit processor 468 performs modulation, mapping, and channel encoding. The multi-antenna transmit processor 457 performs digital multi-antenna space precoding, including codebook-based precoding and non-codebook-based precoding, and beamforming processing. Then, the transmit processor 468 modulates a generated spatial stream into a multi-carrier/single-carrier symbol stream. After an analog precoding/beamforming operation is performed on the multi-carrier/single-carrier symbol stream in the multi-antenna transmit processor 457, the transmitter 454 provides the multi-carrier/single-carrier symbol stream to different antennas 452. Each transmitter 454 first converts a baseband symbol stream provided by the multi-antenna transmit processor 457 into a radio frequency symbol stream, and then provides the radio frequency symbol stream to the antenna 452.

During the transmission from the first communication device 450 to the second communication device 410, a function at the second communication device 410 is similar to the receiving function that is at the first communication device 450 and that is described in the transmission from the second communication device 410 to the first communication device 450. Each receiver 418 receives a radio frequency signal by using a corresponding antenna 420 thereof, converts the received radio frequency signal into a baseband signal, and provides the baseband signal to the multi-antenna receive processor 472 and the receive processor 470. The receive processor 470 and the multi-antenna receive processor 472 jointly implement a function of the layer L1. The controller/processor 475 implements a function of the layer L2. The controller/processor 475 may be associated with the memory 476 that stores program code and data. The memory 476 may be referred to as a computer-readable medium. During the transmission from the first communication device 450 to the second communication device 410, the controller/processor 475 provides demultiplexing between a transport channel and a logical channel, packet reassembly, decryption, header decompression, and control signal processing, to restore an upper-layer data packet from the UE 450. An upper-layer data packet from the controller/processor 475 may be provided to the core network.

In an embodiment, the first communication device 450 includes at least one processor and at least one memory. The at least one memory includes computer program code. The at least one memory and the computer program code are configured to be used with the at least one processor. The first communication device 450 at least triggers a first buffer status report in response to that a first data packet set becomes available; or cancels the first buffer status report in response to that any candidate condition in a first candidate condition set is satisfied. The first data packet set includes at least one data packet, and each data packet in the first data packet set is a data packet above a MAC sublayer. The first candidate condition set includes at least a first condition and a second condition. The first condition includes that the first data packet set is discarded. The second condition includes that a first MAC PDU is sent and the first buffer status report is generated before the first MAC PDU is assembled. The first MAC PDU indicates a buffer status.

In an embodiment, the first communication device 450 includes a memory storing a computer-readable instruction program. The computer-readable instruction program generates actions when being executed by at least one processor. The action includes: triggering a first buffer status report in response to that a first data packet set becomes available; or canceling the first buffer status report in response to that any candidate condition in a first candidate condition set is satisfied. The first data packet set includes at least one data packet, and each data packet in the first data packet set is a data packet above a MAC sublayer. The first candidate condition set includes at least a first condition and a second condition. The first condition includes that the first data packet set is discarded. The second condition includes that a first MAC PDU is sent and the first buffer status report is generated before the first MAC PDU is assembled. The first MAC PDU indicates a buffer status.

In an embodiment, the second communication device 410 includes at least one processor and at least one memory. The at least one memory includes computer program code. The at least one memory and the computer program code are configured to be used with the at least one processor. The second communication device 410 at least receives a first MAC PDU. A first buffer status report is triggered in response to that a first data packet set becomes available; or the first buffer status report is canceled in response to that any candidate condition in a first candidate condition set is satisfied. The first data packet set includes at least one data packet, and each data packet in the first data packet set is a data packet above a MAC sublayer. The first candidate condition set includes at least a first condition and a second condition. The first condition includes that the first data packet set is discarded. The second condition includes that the first MAC PDU is sent and the first buffer status report is generated before the first MAC PDU is assembled. The first MAC PDU indicates a buffer status.

In an embodiment, the second communication device 410 includes a memory storing a computer-readable instruction program. The computer-readable instruction program generates actions when being executed by at least one processor. The action includes: receiving a first MAC PDU. A first buffer status report is triggered in response to that a first data packet set becomes available; or the first buffer status report is canceled in response to that any candidate condition in a first candidate condition set is satisfied. The first data packet set includes at least one data packet, and each data packet in the first data packet set is a data packet above a MAC sublayer. The first candidate condition set includes at least a first condition and a second condition. The first condition includes that the first data packet set is discarded. The second condition includes that the first MAC PDU is sent and the first buffer status report is generated before the first MAC PDU is assembled. The first MAC PDU indicates a buffer status.

In an embodiment, at least one of the antenna 452, the transmitter 454, the transmit processor 468, and the controller/processor 459 is configured to send the first MAC PDU.

In an embodiment, at least one of the antenna 420, the receiver 418, the receiving processor 470, and the controller/processor 475 is configured to receive the first MAC PDU.

In an embodiment, at least one of the antenna 452, the transmitter 454, the transmit processor 468, and the controller/processor 459 is configured to send a first SR.

In an embodiment, at least one of the antenna 420, the receiver 418, the receive processor 470, and the controller/processor 475 is configured to receive the first SR.

In an embodiment, the first communication device 450 corresponds to the first node in this application.

In an embodiment, the second communication device 410 corresponds to the second node in this application.

In an embodiment, the first communication device 450 is user equipment.

In an embodiment, the first communication device 450 is user equipment supporting a large delay difference.

In an embodiment, the first communication device 450 is user equipment supporting an NTN.

In an embodiment, the first communication device 450 is an aircraft device.

In an embodiment, the first communication device 450 has a positioning capability.

In an embodiment, the first communication device 450 does not have an energy determining capability.

In an embodiment, the first communication device 450 is user equipment supporting a TN.

In an embodiment, the second communication device 410 is a base station device (gNB/eNB/ng-eNB).

In an embodiment, the second communication device 410 is a base station device supporting a large delay difference.

In an embodiment, the second communication device 410 is a base station device supporting an NTN.

In an embodiment, the second communication device 410 is a satellite device.

In an embodiment, the second communication device 410 is a device in a flight platform.

In an embodiment, the second communication device 410 is a base station device supporting a TN.

### Embodiment 5

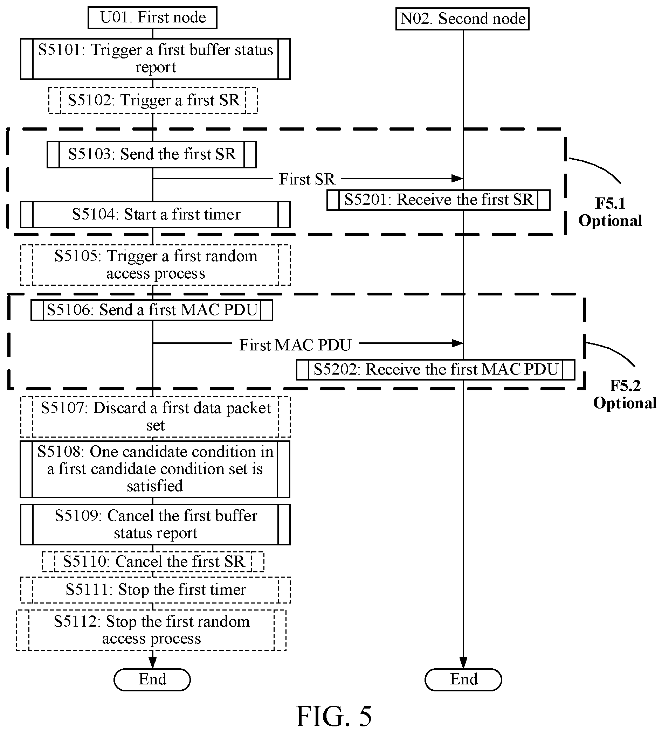

In Embodiment 5, for example, FIG. 5 is a flowchart of transmission of a wireless signal according to an embodiment of this application. It should be particularly noted that a sequence in this example does not limit a signal transmission sequence and an implementation sequence in this application.

For a **first node U01,** a first buffer status report is triggered in response to that a first data packet set becomes available in step S5101; a first SR is triggered in step S5102; the first SR is sent in step S5103; a first timer is started in response to that the first SR is sent in step S5104; a first random access process is triggered in step S5105; a first MAC PDU is sent in step S5106; the first data packet set is discarded in step S5107; one candidate condition in a first candidate condition set is satisfied in step S5108; the first buffer status report is canceled in step S5109 in response to that the candidate condition in the first candidate condition set is satisfied; the first SR is canceled in step S5110 in response to that the candidate condition in the first candidate condition set is satisfied; the first timer is stopped in step S5111 in response to that the candidate condition in the first candidate condition set is satisfied; and the first random access process is stopped in step S5112 in response to that the candidate condition in the first candidate condition set is satisfied.

For a **second node N02,** the first SR is received in step S5201; and the first MAC PDU is received in step S5202.

In Embodiment 5, the first SR is triggered by the first buffer status report. A running status of the first timer is used to determine whether to send the first SR. The first random access process is triggered by the first SR. The first data packet set includes at least one data packet, and each data packet in the first data packet set is a data packet above a MAC sublayer. The first candidate condition set includes at least a first condition and a second condition. The first condition includes that the first data packet set is discarded. The second condition includes that the first MAC PDU is sent and the first buffer status report is generated before the first MAC PDU is assembled. The first MAC PDU indicates a buffer status.

In an embodiment, the first node U01 is user equipment.

In an embodiment, the first node U01 is a base station device.

In an embodiment, the first node U01 is a relay device.

In an embodiment, the second node N02 is a base station device.

In an embodiment, the second node N02 is user equipment.

In an embodiment, the second node N02 is a relay device.

In an embodiment, the first node U01 is user equipment, and the second node N02 is a base station device.

In an embodiment, the first node U01 is user equipment, and the second node N02 is a relay device.

In an embodiment, the first node U01 is user equipment, and the second node N02 is user equipment.

In an embodiment, the first node U01 is a base station device, and the second node N02 is a base station device.

In an embodiment, the first node N01 is a relay device, and the second node N02 is a base station device.

In an embodiment, the first node U01 and the second node N02 are connected through a Uu interface.

In an embodiment, the first node U01 and the second node N02 are connected through an Xn interface.

In an embodiment, the first node U01 and the second node N02 are connected through an X2 interface.

In an embodiment, the first node U01 and the second node N02 are connected through a PC5 interface.

In an embodiment, the first node U01 and the second node N02 are connected through an air interface.

In an embodiment, the first buffer status report is canceled when one candidate condition in at least the first candidate condition set is satisfied.

In an embodiment, the first buffer status report is canceled once one candidate condition in the first candidate condition set is satisfied.

In an embodiment, the first buffer status report is canceled if one candidate condition in the first candidate condition set is satisfied.

In an embodiment, that one candidate condition in the first candidate condition set is satisfied is used to determine to cancel the first buffer status report.

In an embodiment, the first SR is transmitted on a PUCCH (Physical Uplink Control Channel, physical uplink control channel).

In an embodiment, the first SR is transmitted on a PUSCH (Physical Uplink Shared Channel, physical uplink shared channel).

In an embodiment, the first SR occupies only one bit.

In an embodiment, the first SR occupies two bits.

In an embodiment, the first SR occupies a plurality of bits.

In an embodiment, the first SR is triggered at the MAC sublayer.

In an embodiment, the first SR is used to request an uplink resource for the first buffer status report.

In an embodiment, the first SR is an SR triggered by the first buffer status report.

In an embodiment, the first SR is an SR for the first buffer report.

In an embodiment, the first SR is triggered after the first buffer status report is triggered.

In an embodiment, the first SR is triggered in response to that the first buffer status report is triggered.

In an embodiment, in response to that the first buffer status report is triggered, no UL-SCH resource available to new transmission (there is no UL-SCH resource available for a new transmission) is used to trigger the first SR.

In an embodiment, in response to that the first buffer status report is triggered, that a UL-SCH resource available to new transmission does not satisfy an LCP mapping restriction of a logical channel triggering only the first BSR (the UL-SCH resources available for a new transmission do not meet the LCP mapping restrictions configured for the logical channel that triggered the BSR) is used to trigger the first SR.

In an embodiment, the first SR is triggered when at least the first buffer status report is triggered and not canceled.

In an embodiment, the first SR is triggered when it is determined that at least the first buffer status report is triggered and not canceled, and there is no UL-SCH resource available to new transmission.

In an embodiment, the first SR is triggered when it is determined that at least the first buffer status report is triggered and not canceled, and a UL-SCH resource available to new transmission does not satisfy an LCP mapping restriction of a logical channel triggering only the first buffer status report.

In an embodiment, the first SR is triggered when at least the first buffer status report is triggered and not canceled, the first buffer status report is a regular BSR, and there is no UL-SCH resource available to new transmission.

In an embodiment, the first SR is triggered when at least the first buffer status report is triggered and not canceled, the first buffer status report is a regular BSR, and a UL-SCH resource available to new transmission does not satisfy an LCP mapping restriction of a logical channel triggering only the first BSR.

In an embodiment, the first SR is triggered when it is determined that at least the first buffer status report is triggered and not canceled, the first buffer status report is an enhanced BSR, and there is no UL-SCH resource available to new transmission.

In an embodiment, the first SR is triggered when it is determined that at least the first buffer status report is triggered and not canceled, the first buffer status report is an enhanced BSR, and a UL-SCH resource available to new transmission does not satisfy an LCP mapping restriction of a logical channel triggering only the first buffer status report.

In an embodiment, the first SR is canceled when one candidate condition in at least the first candidate condition set is satisfied.

In an embodiment, the first SR is canceled once one candidate condition in the first candidate condition set is satisfied.

In an embodiment, the first SR is canceled if one candidate condition in the first candidate condition set is satisfied.

In an embodiment, that one candidate condition in the first candidate condition set is satisfied is used to determine to cancel the first SR.

In an embodiment, the first SR is a pending SR.

In an embodiment, in response to that one candidate condition in the first candidate condition set is satisfied, the first SR is canceled if the first SR is pending.

In an embodiment, the first SR is pending when one candidate condition in the first candidate condition set is satisfied.

In an embodiment, the phrase "in response to that one candidate condition in the first candidate condition set is satisfied" includes: in response to that any candidate condition in the first candidate condition set is satisfied.

In an embodiment, the phrase "in response to that one candidate condition in the first candidate condition set is satisfied" includes: in response to that a given candidate condition in the first candidate condition set is satisfied.

In an embodiment, the phrase "in response to that one candidate condition in the first candidate condition set is satisfied" includes: in response to that the first condition in the first candidate condition set is satisfied, the first condition is satisfied.

In an embodiment, the phrase "in response to that one candidate condition in the first candidate condition set is satisfied" includes: in response to that the second condition in the first candidate condition set is satisfied, the second condition is satisfied.

In an embodiment, the phrase "in response to that one candidate condition in the first candidate condition set is satisfied" includes: in response to that a third condition in the first candidate condition set is satisfied, the third condition is satisfied.

In an embodiment, when one candidate condition in the first candidate condition set is satisfied, an sr-ProhibitTimer is not configured for the first SR.

In a sub embodiment of this embodiment, a type of the first buffer status report is used to determine that an sr-ProhibitTimer is not configured for the first SR.

In an embodiment, when one candidate condition in the first candidate condition set is satisfied, an sr-ProhibitTimer for the first SR is not running.

In an embodiment, an sr-ProhibitTimer for the first SR is not started.

In an embodiment, an sr-ProhibitTimer for the first SR is started.

In an embodiment, when one candidate condition in the first candidate condition set is satisfied, an SR_COUNTER for the first SR is equal to 0.

In an embodiment, in response to that the first SR is sent, starting of the first timer is skipped; and the first timer is configured.

In an embodiment, in response to that the first SR is sent, starting of the first timer is skipped; and the first timer is not configured.

In an embodiment, that the first SR is considered as prioritized SR transmission (prioritized SR transmission) is used to determine to send the first SR.

In an embodiment, when one candidate condition in the first candidate condition set is satisfied, an sr-ProhibitTimer for the first SR is running.

In an embodiment, when one candidate condition in the first candidate condition set is satisfied, an SR_COUNTER for the first SR < sr-TransMax.

In an embodiment, when one candidate condition in the first candidate condition set is satisfied, an SR_COUNTER for the first SR is greater than 0.

In an embodiment, that the first timer is not running is used to determine to send the first SR.

In an embodiment, the first timer is not running when the first SR is sent.

In an embodiment, in response to that the first SR is sent, the first timer is started; and the first timer is configured.

In an embodiment, the first timer is a timer at the MAC sublayer.

In an embodiment, the first timer is an sr-ProhibitTimer.

In an embodiment, the first timer is an sr-ProhibitTimer for the first SR.

In an embodiment, the first timer is timing.

In an embodiment, the first timer counts down.

In an embodiment, the starting includes start.

In an embodiment, the starting includes startup.

In an embodiment, the starting includes enabling the first timer to start timing.

In an embodiment, in response to that one candidate condition in the first candidate condition set is satisfied, the first timer is stopped if the first timer is running.

In an embodiment, the stopping includes enabling the first timer to stop timing.

In an embodiment, the stopping includes stop.

In an embodiment, the first timer is stopped when one candidate condition in at least the first candidate condition set is satisfied.

In an embodiment, the first timer is stopped once one candidate condition in the first candidate condition set is satisfied.

In an embodiment, the first timer is stopped if one candidate condition in the first candidate condition set is satisfied.

In an embodiment, that one candidate condition in the first candidate condition set is satisfied is used to determine to stop the first timer.

In an embodiment, the first SRis sent only when an SR_COUNTER of the first SR> sr-TransMax.

In an embodiment, on one SR occasion, the first SR is sent only when at least the first timer is not running.

In an embodiment, on an SR occasion, the first SR is not sent if the first timer is running.

In an embodiment, the first random access process is a random access process.

In an embodiment, the first random access process is a two-step random access process.

In an embodiment, the first random access process is a four-step random access process.

In an embodiment, the first random access process is stopped when one candidate condition in at least the first candidate condition set is satisfied.

In an embodiment, the first random access process is stopped once one candidate condition in the first candidate condition set is satisfied.

In an embodiment, the first random access process is stopped if one candidate condition in the first candidate condition set is satisfied.

In an embodiment, that one candidate condition in the first candidate condition set is satisfied is used to determine to stop the first random access process.

In an embodiment, the behavior of triggering the first random access process includes initiating (initiate) the first random access process.

In an embodiment, the behavior of triggering the first random access process includes initiating the first random access process in an SpCell (Special Cell, special cell).

In an embodiment, the behavior of triggering the first random access process includes initiating the first random access process in an SpCell of the first node U01.

In an embodiment, the first SR is canceled with the behavior of triggering the first random access process.

In an embodiment, that a first MAC entity does not configure an available PUCCH resource for the first SR is used to trigger the first random access process.

In an embodiment, the first SR is not triggered before one candidate condition in the first candidate condition set is satisfied.

In an embodiment, the first SR is triggered before one candidate condition in the first candidate condition set is satisfied.

In an embodiment, the first buffer status report is triggered in response to that the first data packet set becomes available; the first SR is triggered in response to that the first buffer status report is triggered; the first buffer status report is canceled in response to that any candidate condition in the first candidate condition set is satisfied; and the first SR is canceled.

In a sub embodiment of this embodiment, the first timer is not running when one candidate condition in the first candidate condition set is satisfied.

In a sub embodiment of this embodiment, an SR_COUNTER is equal to 0 when one candidate condition in the first candidate condition set is satisfied.

In a sub embodiment of this embodiment, an SR_COUNTER is greater than 0 when one candidate condition in the first candidate condition set is satisfied.

In a sub embodiment of this embodiment, the first SR is not sent.

In a sub embodiment of this embodiment, the first SR is sent.

In a sub embodiment of this embodiment, the first SR is sent in response to that the first SR is triggered.

In a sub embodiment of this embodiment, starting of the first timer is skipped in response to that the first SR is sent.

In an auxiliary embodiment of this sub embodiment, the first timer is configured.

In an auxiliary embodiment of this sub embodiment, the first timer is not configured.

In a sub embodiment of this embodiment, a sequence of the behavior of canceling the first buffer status report and the behavior of canceling the first SR is not limited in this embodiment.

In a sub embodiment of this embodiment, a sequence of the behavior of canceling the first buffer status report and the behavior of canceling the first SR is pre-defined.

In a sub embodiment of this embodiment, a sequence of the behavior of canceling the first buffer status report and the behavior of canceling the first SR is implemented by the UE.

In a sub embodiment of this embodiment, the behavior of canceling the first buffer status report and the behavior of canceling the first SR are simultaneously performed.

In a sub embodiment of this embodiment, the behavior of canceling the first buffer status report and the behavior of canceling the first SR are not simultaneously performed.

In an embodiment, the first timer is not started before one candidate condition in the first candidate condition set is satisfied.

In an embodiment, the first timer is started before one candidate condition in the first candidate condition set is satisfied.

In an embodiment, the first buffer status report is triggered in response to that the first data packet set becomes available; the first SR is triggered in response to that the first buffer status report is triggered; the first SR is sent in response to that the first SR is triggered; the first buffer status report is canceled in response to that any candidate condition in the first candidate condition set is satisfied; and the first SR is canceled.

In an embodiment, the first buffer status report is triggered in response to that the first data packet set becomes available; the first SR is triggered in response to that the first buffer status report is triggered; the first SR is sent in response to that the first SR is triggered; the first timer is started in response to that the first SR is sent; the first buffer status report is canceled in response to that any candidate condition in the first candidate condition set is satisfied; the first SR is canceled; and the first timer is stopped. A running status of the first timer is used to determine whether to send the first SR.

In a sub embodiment of this embodiment, a sequence of the behavior of canceling the first buffer status report, the behavior of stopping the first timer, and the behavior of stopping the first random access process is not limited in this embodiment.

In a sub embodiment of this embodiment, a sequence of the behavior of canceling the first buffer status report, the behavior of stopping the first timer, and the behavior of stopping the first random access process is pre-defined.

In a sub embodiment of this embodiment, a sequence of the behavior of canceling the first buffer status report, the behavior of stopping the first timer, and the behavior of stopping the first random access process is implemented by the UE.

In a sub embodiment of this embodiment, the behavior of canceling the first buffer status report, the behavior of stopping the first timer, and the behavior of stopping the first random access process are simultaneously performed.

In a sub embodiment of this embodiment, the behavior of canceling the first buffer status report, the behavior of stopping the first timer, and the behavior of stopping the first random access process are not simultaneously performed.

In an embodiment, the first random access process is not triggered before one candidate condition in the first candidate condition set is satisfied.

In an embodiment, the first random access process is triggered before one candidate condition in the first candidate condition set is satisfied.

In an embodiment, the first buffer status report is triggered in response to that the first data packet set becomes available; the first SR is triggered in response to that the first buffer status report is triggered; the first random access process is triggered in response to that the first SR is triggered; the first buffer status report is canceled in response to that any candidate condition in the first candidate condition set is satisfied; and the first random access process is stopped.

In a sub embodiment of this embodiment, a sequence of the behavior of canceling the first buffer status report and the behavior of stopping the first random access process is not limited in this embodiment.

In a sub embodiment of this embodiment, a sequence of the behavior of canceling the first buffer status report and the behavior of stopping the first random access process is pre-defined.

In a sub embodiment of this embodiment, a sequence of the behavior of canceling the first buffer status report and the behavior of stopping the first random access process is implemented by the UE.

In a sub embodiment of this embodiment, the behavior of canceling the first buffer status report and the behavior of stopping the first random access process are simultaneously performed.

In a sub embodiment of this embodiment, the behavior of canceling the first buffer status report and the behavior of stopping the first random access process are not simultaneously performed.

In a sub embodiment of this embodiment, the first SR is canceled with the behavior of triggering the first random access process.

In an embodiment, a dashed-line box F5.1 is optional.

In an embodiment, the dashed-line box F5.1 exists.

In an embodiment, the dashed-line box F5.1 does not exist.

In an embodiment, a dashed-line box F5.2 is optional.

In an embodiment, the dashed-line box F5.2 exists.

In a sub embodiment of this embodiment, one UL grant is used to send the first MAC PDU.

In a sub embodiment of this embodiment, the first SR is not sent before the first MAC PDU is sent.

In a sub embodiment of this embodiment, the first SR is sent before the first MAC PDU is sent.

In a sub embodiment of this embodiment, after the first SR is sent, one piece of DCI (Downlink Control Information, downlink control information) is received, where the DCI indicates the UL grant.

In a sub embodiment of this embodiment, one RRC message indicates the UL grant.

In a sub embodiment of this embodiment, one PUSCH resource of a configured grant Type 1 indicates the UL grant.

In a sub embodiment of this embodiment, one MAC RAR (Random Access Response, random access response) indicates the UL grant.

In a sub embodiment of this embodiment, one fallbackRAR indicates the UL grant.

In a sub embodiment of this embodiment, the UL grant is configured for a preamble of one MSGA.

In a sub embodiment of this embodiment, one MSGB indicates the UL grant.

In a sub embodiment of this embodiment, transmission of one PDCCH is sent in response to that the first MAC PDU is received, where the PDCCH indicates at least one of time resource allocation or frequency domain resource allocation of one PUSCH, RV, or MCS.

In a sub embodiment of this embodiment, transmission of one PDCCH is sent in response to that the first MAC PDU is received, where the PDCCH indicates one CG (Configured Grant, configured grant) resource.

In a sub embodiment of this embodiment, transmission of one PDCCH is sent in response to that the first MAC PDU is received, where the PDCCH indicates one PUSCH resource of a configured grant Type 2.

In an embodiment, the dashed-line box F5.2 does not exist.

In an embodiment, step S5102 is optional.

In an embodiment, step S5102 exists.

In an embodiment, step S5102 does not exist.

In an embodiment, step S5105 is optional.

In an embodiment, step S5105 exists.

In an embodiment, step S5105 does not exist.

In an embodiment, step S5107 is optional.

In an embodiment, step S5107 exists.

In an embodiment, step S5107 does not exist.

In an embodiment, step S5110 is optional.

In an embodiment, step S5110 exists.

In a sub embodiment of this embodiment, the first SR is triggered.

In a sub embodiment of this embodiment, the first SR is triggered, and the first SR is not canceled when one candidate condition in the first candidate condition set is satisfied.

In a sub embodiment of this embodiment, the first SR is pending (pending) when one candidate condition in the first candidate condition set is satisfied.

In a sub embodiment of this embodiment, the phrase "the first SR is pending" includes: the first SR is considered as pending (is considered as pending).

In a sub embodiment of this embodiment, the phrase "the first SR is pending" includes: the first SR shall be considered as pending (shall be considered as pending).

In a sub embodiment of this embodiment, when the first SR is triggered, the first SR shall be considered as pending until the first SR is canceled (When a first SR is triggered, the first SR shall be considered as pending until the first SR is cancelled).

In an embodiment, step S5110 does not exist.

In a sub embodiment of this embodiment, the first SR is not triggered.

In a sub embodiment of this embodiment, the first SR is triggered, and the first SR is canceled before one candidate condition in the first candidate condition set is satisfied.

In an embodiment, step S5111 is optional.

In an embodiment, step S5111 exists.

In a sub embodiment of this embodiment, the first timer is started.

In a sub embodiment of this embodiment, the first timer is running when one candidate condition in the first candidate condition set is satisfied.

In an embodiment, step S5111 does not exist.

In a sub embodiment of this embodiment, the first timer is not started.

In a sub embodiment of this embodiment, the first timer is started, and the first timer is stopped before one candidate condition in the first candidate condition set is satisfied.

In a sub embodiment of this embodiment, the first timer is started, and the first timer expires before one candidate condition in the first candidate condition set is satisfied.

In a sub embodiment of this embodiment, the first timer is not running when one candidate condition in the first candidate condition set is satisfied.

In an embodiment, step S5112 is optional.

In an embodiment, step S5112 exists.

In a sub embodiment of this embodiment, the first random access process is triggered.

In a sub embodiment of this embodiment, the first random access process is in progress when one candidate condition in the first candidate condition set is satisfied.

In an embodiment, step S5112 does not exist.

In a sub embodiment of this embodiment, the first random access process is not triggered.

In a sub embodiment of this embodiment, the first random access process is triggered, and the first random access process is successfully completed before one candidate condition in the first candidate condition set is satisfied.

In a sub embodiment of this embodiment, the first random access process is not in progress when one candidate condition in the first candidate condition set is satisfied.

In an embodiment, if step S5102 does not exist, the dashed-line box F5.1 does not exist, step S5105 does not exist, step S5110 does not exist, step S5111 does not exist, and step S5112 does not exist.

In an embodiment, if the dashed-line box F5.1 does not exist, step S5111 does not exist.

In an embodiment, if step S5105 does not exist, step S5112 does not exist.

In an embodiment, the behavior of discarding the first data packet set includes: discarding the first data packet set at a layer higher than an SDAP sublayer.

In an embodiment, the behavior of discarding the first data packet set includes: discarding the first data packet set at an SDAP sublayer.

In an embodiment, the behavior of discarding the first data packet set includes: discarding the first data packet set at a PDCP sublayer.

In an embodiment, the behavior of discarding the first data packet set includes: discarding the first data packet set at an RLC sublayer.

In an embodiment, the behavior of discarding the first data packet set includes: discarding the first data packet set at a MAC sublayer.

In an embodiment, the behavior of discarding the first data packet set includes: discarding any data packet in the first data packet set.

In an embodiment, the behavior of discarding the first data packet set includes: discarding at least one data packet in the first data packet set.

In an embodiment, the behavior of discarding the first data packet set includes: discarding each data packet in the first data packet set.

In an embodiment, the behavior of discarding the first data packet set includes: discarding a buffered data packet that belongs to the first data packet set.

In an embodiment, the behavior of discarding the first data packet set includes: discarding a data packet that belongs to the first data packet set and that is in a buffer.

In an embodiment, the first MAC entity of the first node U01 triggers the first SR.

In an embodiment, the first MAC entity of the first node U01 cancels the first SR.

In an embodiment, the first MAC entity of the first node U01 starts the first timer.

In an embodiment, the first MAC entity of the first node U01 stops the first timer.

In an embodiment, the first MAC entity of the first node U01 triggers the first random access process.

In an embodiment, the first MAC entity of the first node U01 stops the first random access process.

### Embodiment 6

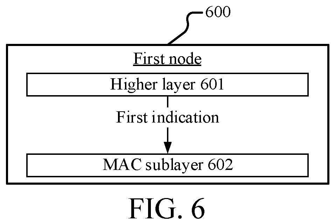

For example, a schematic diagram of a first indication according to an embodiment of this application is shown in Embodiment 6. In FIG. 6, a first node 600 includes a higher layer 601 and a MAC sublayer 602.

In Embodiment 6, the higher layer 601 of the first node 600 sends a first indication to the MAC sublayer 602 of the first node 600; and the MAC sublayer 602 of the first node 600 receives the first indication. The first indication is used to indicate that the first data packet set is discarded. The first condition includes that the first indication is received.

In an embodiment, the phrase "the first condition includes that at least the first data packet set is discarded" may be replaced as: the first indication is received.

In an embodiment, the first condition is related to that the first indication is received.

In an embodiment, in response to the behavior of discarding the first data packet, the higher layer 601 of the first node 600 sends the first indication to the MAC sublayer 602 of the first node 600.

In an embodiment, in response to determining to discard the first data packet, the higher layer 601 of the first node 600 sends the first indication to the MAC sublayer 602 of the first node 600.

In an embodiment, once the first data packet is discarded, the higher layer 601 of the first node 600 sends the first indication to the MAC sublayer 602 of the first node 600.

In an embodiment, once the first data packet is determined to be discarded, the higher layer 601 of the first node 600 sends the first indication to the MAC sublayer 602 of the first node 600.

In an embodiment, the first indication is a notification.

In an embodiment, the first indication is a command.

In an embodiment, the first indication includes an identifier.

In an embodiment, the first indication includes an identifier of a logical channel to which the first data packet set belongs.

In an embodiment, the first indication includes an identifier of a DRB to which the first data packet set belongs.

In an embodiment, the first indication includes an identifier of a logical channel group to which the first data packet set belongs.

In an embodiment, the first indication includes an identifier of the first data packet set.

In an embodiment, the first indication is used to notify that the first data packet set is discarded.

In an embodiment, the first indication is used to command to discard the first data packet set.

In an embodiment, the first indication is an indication between protocol layers.

In an embodiment, the first indication is generated at the higher layer 601.

In an embodiment, the first indication is generated at a layer higher than the higher layer 601.

In an embodiment, the first indication is sent by the higher layer 601 to the MAC sublayer 602.

In an embodiment, the first indication is sent to the MAC sublayer 602 by a protocol layer lower than the higher layer 601.

In an embodiment, the higher layer 601 includes at least one protocol layer higher than the MAC sublayer 602.

In an embodiment, the higher layer 601 is an SDAP sublayer.

In an embodiment, the higher layer 601 is a PDCP sublayer.

In an embodiment, the higher layer 601 is an RLC sublayer.

In an embodiment, the higher layer 601 is at least one protocol layer higher than the MAC sublayer 602.

In an embodiment, that the first condition includes that the first indication is received is used to determine that the first condition includes that the first data packet set is discarded.

### Embodiment 7

For example, a schematic diagram in which a first MAC PDU includes a first-type MAC CE according to an embodiment of this application is shown in Embodiment 7.

In Embodiment 7, the first MAC PDU includes a first-type MAC CE, and the first-type MAC CE indicates the buffer status.

In an embodiment, the first-type MAC CE is indicated by a candidate LCID in a first candidate LCID set, and the first candidate LCID set does not include any one of 59, 60, 61, or 62.

In a sub embodiment of this embodiment, the candidate LCID in the first candidate LCID set is used to indicate the first-type MAC CE.

In a sub embodiment of this embodiment, a domain other than an LCID domain or eLCID (extended Logical Channel ID, extended logical channel identifier) domain of the first-type MAC CE is used to indicate the first-type MAC CE.

In an embodiment, the first-type MAC CE includes a first domain, the first domain is set as a first index, and the first index indicates the buffer status.

In an embodiment, the first domain indicates a data amount.

In an embodiment, the first domain indicates a data amount report.

In an embodiment, the first domain indicates a buffer status level.

In an embodiment, the first domain indicates a buffer size.

In an embodiment, the first domain indicates an amount of buffered data.

In an embodiment, the first domain indicates an expected data amount.

In an embodiment, the first domain is a data-amount report domain.

In an embodiment, the first domain is a buffer size (Buffer Size) domain.

In an embodiment, the first domain indicates a data amount for one object.

In an embodiment, the first domain indicates a total amount of data available (the total amount of data available) to one object.

In an embodiment, the first domain indicates a buffer status level of a data amount for one object.

In an embodiment, the first domain indicates a maximum value of a data amount for one object.

In an embodiment, the first domain indicates a minimum value of a data amount for one object.

In an embodiment, the first domain indicates an amount of remaining data for one object.

In an embodiment, the first domain indicates an amount of to-be-transmitted data for one object.

In an embodiment, the first domain indicates an amount of buffered data for one object.

In an embodiment, the first object is a logical channel, and the first data packet set is associated with the logical channel.

In an embodiment, the first object is a DRB (Data Radio Bearer, data radio bearer), and the first data packet set is associated with the DRB.

In an embodiment, the first object includes the first data packet set.

In an embodiment, the first object includes only the first data packet set.

In an embodiment, the first object is the first data packet set.

In an embodiment, the first object includes at least one data packet set, and the at least one data packet set includes the first data packet set.

In a sub embodiment of this embodiment, the at least one data packet set is associated with a same LCG.

In a sub embodiment of this embodiment, the at least one data packet set is associated with at least one LCG.

In a sub embodiment of this embodiment, the at least one data packet set is associated with one or more LCGs.

In a sub embodiment of this embodiment, the at least one data packet set is not associated with a plurality of LCGs.

In a sub embodiment of this embodiment, the at least one data packet set includes one or more data packet sets.

In a sub embodiment of this embodiment, the at least one data packet set includes a plurality of data packet sets.

In an embodiment, the data amount does not count an RLC (Radio Link Control, radio link control) subheader.

In an embodiment, the data amount does not count a MAC subheader.

In an embodiment, the data amount is a total amount of available data (the total amount of data available).

In an embodiment, a unit of the data amount is a byte (byte).

In an embodiment, a unit of the data amount is a bit (bit).

In an embodiment, the first index is an index of a buffer status level.

In an embodiment, the first index is an index of a buffer size.

In an embodiment, the first index is an index of a buffer size level (Buffer size level).

In an embodiment, the buffer status is determined by searching a first table based on the first index.

In an embodiment, the first index is an index in a first table, and the buffer status is a BS value corresponding to the index in the first table.

In an embodiment, the first table is neither of the table 6.1.3.1-1 or the table 6.1.3.1-2 in the section 6.1.3.1 of the 3GPP TS 38.321.

In an embodiment, a quantity of indexes in the first table is different from that in either of the table 6.1.3.1-1 or the table 6.1.3.1-2 in the section 6.1.3.1 of the 3GPP TS 38.321.

In an embodiment, a range of at least one BS value in the first table is different from that in either of the table 6.1.3.1-1 or the table 6.1.3.1-2 in the section 6.1.3.1 of the 3GPP TS 38.321.

In an embodiment, the first MAC PDU is a BSR MAC CE specific (specific) to XR.

In an embodiment, the first MAC PDU is a BSR MAC CE specific to a PDU set.

In an embodiment, the first MAC PDU is a BSR MAC CE specific to a data packet set.

In an embodiment, the first MAC PDU is a MAC PDU.

In an embodiment, the first MAC PDU includes one or more MAC subPDUs.

In an embodiment, one MAC subPDU in the first MAC PDU includes the first-type MAC CE.

In an embodiment, one MAC subPDU in the first MAC PDU includes the first-type MAC CE and one MAC subheader, the MAC subheader includes one LCID domain, and the LCID domain indicates one candidate LCID in the first candidate LCID set.

In an embodiment, the first-type MAC CE is a MAC CE.

In an embodiment, the first-type MAC CE is a BSR MAC CE.

In an embodiment, the first-type MAC CE is a BSR MAC CE indicated by one candidate LCID in the first candidate LCID set.

In an embodiment, the first-type MAC CE is a BSR MAC CE whose buffer status is determined based on the first table.

In an embodiment, the first-type MAC CE does not include an LCG ID domain, and the first-type MAC CE does not include an LCGᵢ domain
In an embodiment, the first-type MAC CE is an enhanced BSR MAC CE.

In an embodiment, a name of the first-type MAC CE includes BSR.

In an embodiment, a name of the first-type MAC CE includes enhanced BSR.

In an embodiment, a name of the first-type MAC CE includes Truncated.

In an embodiment, a name of the first-type MAC CE does not include Truncated.

In an embodiment, a name of the first-type MAC CE includes at least one of Short, long, Enhanced, BSR, or eBSR (enhanced BSR).

In an embodiment, a name of the first-type MAC CE is Short Enhanced BSR.

In an embodiment, a name of the first-type MAC CE is long Enhanced BSR.

In an embodiment, a name of the first-type MAC CE is Short eBSR.

In an embodiment, a name of the first-type MAC CE is long eBSR.

In an embodiment, the first-type MAC CE includes an LCG ID domain.

In an embodiment, the first-type MAC CE includes an LCGᵢ domain.

In an embodiment, the first-type MAC CE does not include an LCG ID domain.

In an embodiment, the first-type MAC CE does not include an LCGᵢ domain.

In an embodiment, a size of the first-type MAC CE is fixed.

In an embodiment, a size of the first-type MAC CE is variable.

In an embodiment, the first-type MAC CE is truncated (Truncated).

In an embodiment, the first-type MAC CE is not truncated.

In an embodiment, the first-type MAC CE indicates at least the buffer status.

In an embodiment, a domain in the first-type MAC CE indicates the buffer status.

In an embodiment, a Buffer Size domain in the first-type MAC CE indicates the buffer status.

In an embodiment, the first-type MAC CE indicates at least the buffer status and first time information.

In an embodiment, the first-type MAC CE includes K1 MAC domains indicating time information and K1 MAC domains indicating buffer sizes, where K1 is a positive integer.

In an embodiment, the first-type MAC CE includes K1 MAC domains indicating LCGs and K1 MAC domains indicating buffer sizes, where K1 is a positive integer.

In an embodiment, the first-type MAC CE includes K1 MAC domains indicating time information, K1 MAC domains indicating LCGs, and K1 MAC domains indicating buffer sizes, where K1 is a positive integer.

In an embodiment, the first-type MAC CE includes one MAC domain indicating time information, K1 MAC domains indicating LCGs, and K1 MAC domains indicating buffer statuses, where K1 is a positive integer.

In an embodiment, one MAC domain in the K1 MAC domains indicating the time information indicates the first time information.

In an embodiment, one MAC domain in the K1 MAC domains indicating the buffer sizes indicates the buffer status.

In an embodiment, one MAC domain in the K1 MAC domains indicating the LCGs indicates an LCG to which the first data packet set belongs.

In an embodiment, the first-type MAC CE includes one MAC domain indicating the first time information and one MAC domain indicating the buffer status.

In an embodiment, the first-type MAC CE includes one MAC domain indicating the LCG to which the first data packet set belongs and one MAC domain indicating the buffer status.

In an embodiment, the first-type MAC CE includes one MAC domain indicating the first time information, one MAC domain indicating the LCG to which the first data packet set belongs, and one MAC domain indicating the buffer status.

In an embodiment, the first time information is used to determine a time interval.

In an embodiment, the first time information is an index of a time interval.

In an embodiment, a protocol layer higher than the MAC sublayer of the first node indicates the first time information to the MAC sublayer of the first node.

In an embodiment, the MAC sublayer of the first node determines the first time information.

In an embodiment, only the first data packet set is used to determine the first time information.

In an embodiment, at least the first data packet set is used to determine the first time information.

In an embodiment, a plurality of data packet sets are used to determine the first time information.

In an embodiment, the first time information is a smallest value in a plurality of pieces of candidate time information, and the plurality of pieces of candidate time information are respectively associated with a plurality of data packet sets.

In an embodiment, a unit of the time interval is a millisecond.

In an embodiment, a unit of the time interval is 10 milliseconds.

In an embodiment, a unit of the time interval is a second.

In an embodiment, the first time information is used to determine a PDB (packet delay budget, packet delay budget) for the first data packet set.

In an embodiment, the first time information is used to determine a PDB for one data packet set.

In an embodiment, the first time information is related to the first data packet set.

In an embodiment, the first time information is related to the first data packet set.

In an embodiment, the first time information is related to a last data packet in the first data packet set.

In an embodiment, the first time information is related to a data packet having a largest SN number in the first data packet set.

In an embodiment, the first time information is related to a time budget for the first data packet set.

In an embodiment, the first time information is related to a time budget of a last data packet in the first data packet set.

In an embodiment, the first time information is related to a time budget of a data packet having a largest SN number in the first data packet set.

In an embodiment, the first time information is related to transmission duration of the first data packet set.

In an embodiment, the first time information is related to transmission duration of at least one data packet in the first data packet set.

In an embodiment, the first time information indicates a time budget of the first data packet set.

In an embodiment, the time budget is a time budget.

In an embodiment, the time budget includes time allocation.

In an embodiment, the time budget includes expected duration.

In an embodiment, the time budget includes required transmission duration.

In an embodiment, the time budget includes remaining transmission duration.

In an embodiment, the first MAC PDU includes a third domain, and the third domain indicates whether the first-type MAC CE indicates the first time information.

In an embodiment, the third domain is a domain in the first-type MAC CE.

In an embodiment, the third domain is a domain in a MAC subheader of the first MAC PDU.

In an embodiment, the third domain is a domain in a MAC subheader corresponding to the first-type MAC CE, and the first-type MAC CE and the MAC subheader corresponding to the first-type MAC CE belong to a same MAC subPDU in the first MAC PDU.

In an embodiment, the first MAC PDU does not include a third domain.

In an embodiment, the first-type MAC CE does not indicate the first time information.

In an embodiment, the first-type MAC CE does not indicate any time information.

In an embodiment, a MAC CE other than the first-type MAC CE indicates the first time information.

In an embodiment, one RRC message indicates the first time information.

In an embodiment, one piece of physical-layer signaling indicates the first time information.

In an embodiment, at least one bit of a TB indicates the first time information.

In an embodiment, the candidate LCID in the first candidate LCID set is 37, 38, 39, 40, 41, or 42. The candidate LCID is an index (Index) of an LCID.

In an embodiment, the candidate LCID in the first candidate LCID set is 37, 38, 39, 40, 41, or 42. The candidate LCID is a codepoint (Codepoint) of an LCID.

In an embodiment, the candidate LCID in the first candidate LCID set is an integer not less than 64 and not greater than 292. The candidate LCID is an index of an eLCID.

In an embodiment, the candidate LCID in the first candidate LCID set is an integer not less than 0 and not greater than 228. The candidate LCID is a codepoint of an eLCID.

In an embodiment, the first MAC PDU is sent through a Uu port.

In an embodiment, the first MAC PDU is sent through a PC5 interface.

In an embodiment, the first MAC PDU is sent through an NR-Uu interface.

In an embodiment, the first MAC PDU is sent through an Xn port.

In an embodiment, the first MAC PDU is sent on an SL-SCH (Sidelink Shared Channel, sidelink shared channel).

In an embodiment, the first MAC PDU is sent on a UL-SCH (Uplink Shared Channel, uplink shared channel).

### Embodiment 8

For example, a schematic diagram in which a first MAC PDU includes a second-type MAC CE according to an embodiment of this application is shown in Embodiment 8.

In Embodiment 8, the first MAC PDU includes a second-type MAC CE, and the second-type MAC CE indicates the buffer status. The second-type MAC CE is indicated by a candidate LCID in a second candidate LCID set, and the second candidate LCID set includes at least one of 59, 60, 61, or 62.

In an embodiment, the second-type MAC CE includes a second domain, the second domain is set as a second index, and the second index indicates the buffer status.

In an embodiment, the second domain is a Buffer Size domain.

In an embodiment, the buffer status is determined by searching a second table based on the second index.

In an embodiment, the second index is an index in a second table, and the buffer status is a BS value corresponding to the index in the second table.

In an embodiment, the second table is the table 6.1.3.1-1 in the section 6.1.3.1 of the 3GPP TS 38.321.

In an embodiment, the second table is the table 6.1.3.1-2 in the section 6.1.3.1 of the 3GPP TS 38.321.

In an embodiment, one MAC subPDU in the first MAC PDU includes the second-type MAC CE.

In an embodiment, one MAC subPDU in the first MAC PDU includes the second-type MAC CE and one MAC subheader, the MAC subheader includes one LCID domain, and the LCID domain indicates one candidate LCID in the second candidate LCID set.

In an embodiment, the second-type MAC CE is a MAC CE.

In an embodiment, the second-type MAC CE is a BSR MAC CE.

In an embodiment, a domain in the second-type MAC CE indicates the buffer status.

In an embodiment, a Buffer Size domain in the second-type MAC CE indicates the buffer status.

In an embodiment, for a format of the second-type MAC CE, refer to FIG. 6.1. 3.1-1 in the 3GPP TS38.321.

In an embodiment, for a format of the second-type MAC CE, refer to FIG. 6.1. 3.1-2 in the 3GPP TS38.321.

In an embodiment, the second-type MAC CE is a MAC CE indicated by any candidate LCID in the second candidate LCID set.

In an embodiment, the candidate LCID in the second candidate LCID set is 60. The candidate LCID is an index of an LCID.

In an embodiment, the candidate LCID in the first candidate LCID set is 61. The candidate LCID is a codepoint of an LCID.

In an embodiment, the second-type MAC CE is a Short Truncated BSR MAC CE, used to indicate that an LCID of the second-type MAC CE is equal to 59.

In an embodiment, the second-type MAC CE is a Long Truncated BSR MAC CE, used to indicate that an LCID of the second-type MAC CE is equal to 60.

In an embodiment, the second-type MAC CE is a Short BSR MAC CE, used to indicate that an LCID of the second-type MAC CE is equal to 61.

In an embodiment, the second-type MAC CE is a Long BSR MAC CE, used to indicate that an LCID of the second-type MAC CE is equal to 62.

In an embodiment, the candidate LCID in the second candidate LCID set indicates a format of the second-type MAC CE.

In an embodiment, the second candidate LCID set includes at least 61 and 62.

In an embodiment, the second candidate LCID set includes 59, 60, 61, and 62.

In an embodiment, the second candidate LCID set does not include 59 and 60.

### Embodiment 9

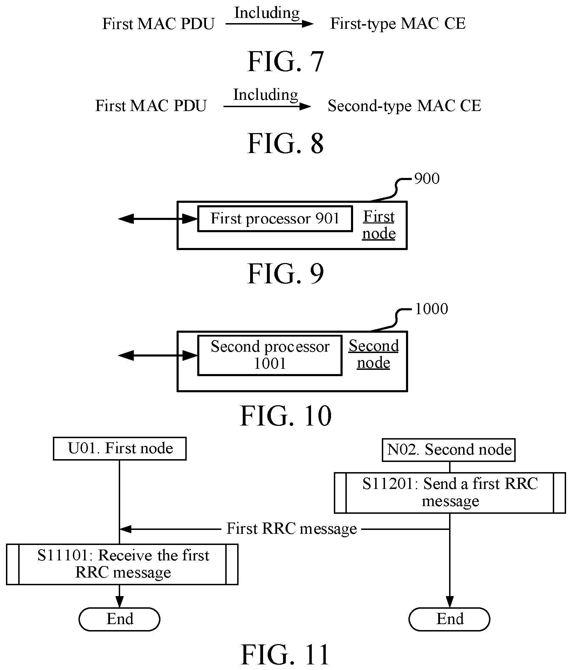

In Embodiment 9, for example, FIG. 9 is a structural block diagram of a processing apparatus for a first node according to an embodiment of this application. In FIG. 9, a processing apparatus 900 in a first node includes a first processor 901.

The first processor 901 triggers a first buffer status report in response to that a first data packet set becomes available; or cancels the first buffer status report in response to that any candidate condition in a first candidate condition set is satisfied.

In Embodiment 9, the first data packet set includes at least one data packet, and each data packet in the first data packet set is a data packet above a MAC sublayer. The first candidate condition set includes at least one of a first condition or a second condition. The first condition includes that the first data packet set is discarded. The second condition includes that a first MAC PDU is sent and the first buffer status report is generated before the first MAC PDU is assembled. The first MAC PDU indicates a buffer status.

In an embodiment, the first candidate condition set includes at least the first condition and the second condition.

In an embodiment, the first candidate condition set includes at least the first condition.

In an embodiment, the first candidate condition set includes at least the second condition.

In an embodiment, the first processor 901 triggers a first SR, where the first SR is triggered by the first buffer status report.

In an embodiment, the first processor 901 cancels the first SR in response to that one candidate condition in the first candidate condition set is satisfied.

In an embodiment, the first processor 901 sends the first SR; and starts a first timer in response to that the first SR is sent; or stops the first timer in response to that one candidate condition in the first candidate condition set is satisfied. A running status of the first timer is used to determine whether to send the first SR.

In an embodiment, the first processor 901 triggers a first random access process; or stops the first random access process in response to that one candidate condition in the first candidate condition set is satisfied. The first random access process is triggered by the first SR.

In an embodiment, the first MAC PDU includes a first-type MAC CE, and the first-type MAC CE indicates the buffer status. The first-type MAC CE is indicated by a candidate LCID in a first candidate LCID set, and the first candidate LCID set does not include any one of 59, 60, 61, or 62.

In an embodiment, the first MAC PDU includes a second-type MAC CE, and the second-type MAC CE indicates the buffer status. The second-type MAC CE is indicated by a candidate LCID in a second candidate LCID set, and the second candidate LCID set includes at least one of 59, 60, 61, or 62.

In an embodiment, for the first processor 901, the higher layer of the first node sends a first indication to the MAC sublayer of the first node; and the MAC sublayer of the first node receives the first indication. The first indication is used to indicate that the first data packet set is discarded. The first condition includes that the first indication is received.

In an embodiment, the first processor 901 receives a first RRC message. The first RRC message indicates first duration of the first timer.

In an embodiment, the first processor 901 includes a first receiver.

In an embodiment, the first processor 901 includes a first receiver.

In an embodiment, the first processor 901 includes a first receiver and a first transmitter.

In an embodiment, the first receiver includes the antenna 452, the receiver 454, the multi-antenna receive processor 458, the receive processor 456, the controller/processor 459, the memory 460, and the data source 467 in FIG. 4 of this application.

In an embodiment, the first receiver includes the antenna 452, the receiver 454, the multi-antenna receive processor 458, and the receive processor 456 in FIG. 4 of this application.

In an embodiment, the first receiver includes the antenna 452, the receiver 454, and the receive processor 456 in FIG. 4 of this application.

In an embodiment, the first transmitter includes the antenna 452, the transmitter 454, the multi-antenna transmit processor 457, the transmit processor 468, the controller/processor 459, the memory 460, and the data source 467 in FIG. 4 of this application.

In an embodiment, the first transmitter includes the antenna 452, the transmitter 454, the multi-antenna transmit processor 457, and the transmit processor 468 in FIG. 4 of this application.

In an embodiment, the first transmitter includes the antenna 452, the transmitter 454, and the transmit processor 468 in FIG. 4 of this application.

### Embodiment 10

In Embodiment 10, for example, FIG. 10 is a structural block diagram of a processing apparatus for a second node according to an embodiment of this application. In FIG. 10, a processing apparatus 1000 in a second node includes a second processor 1001.

The second processor 1001 receives a first MAC PDU.

In Embodiment 10, a first buffer status report is triggered in response to that a first data packet set becomes available; or the first buffer status report is canceled in response to that any candidate condition in a first candidate condition set is satisfied. The first data packet set includes at least one data packet, and each data packet in the first data packet set is a data packet above a MAC sublayer. The first candidate condition set includes at least one of a first condition or a second condition. The first condition includes that the first data packet set is discarded. The second condition includes that the first MAC PDU is sent and the first buffer status report is generated before the first MAC PDU is assembled. The first MAC PDU indicates a buffer status.

In an embodiment, the first candidate condition set includes at least the first condition and the second condition.

In an embodiment, the first candidate condition set includes at least the first condition.

In an embodiment, the first candidate condition set includes at least the second condition.

In an embodiment, a first SR is triggered. The first SR is triggered by the first buffer status report.

In an embodiment, the first SR is canceled in response to that one candidate condition in the first candidate condition set is satisfied.

In an embodiment, the second processor 1001 receives the first SR. A first timer is started in response to that the first SR is sent; or the first timer is stopped in response to that one candidate condition in the first candidate condition set is satisfied. A running status of the first timer is used to determine whether to send the first SR.

In an embodiment, a first random access process is triggered; or the first random access process is stopped in response to that one candidate condition in the first candidate condition set is satisfied. The first random access process is triggered by the first SR.

In an embodiment, the first MAC PDU includes a first-type MAC CE, and the first-type MAC CE indicates the buffer status. The first-type MAC CE is indicated by a candidate LCID in a first candidate LCID set, and the first candidate LCID set does not include any one of 59, 60, 61, or 62.

In an embodiment, the first MAC PDU includes a second-type MAC CE, and the second-type MAC CE indicates the buffer status. The second-type MAC CE is indicated by a candidate LCID in a second candidate LCID set, and the second candidate LCID set includes at least one of 59, 60, 61, or 62.

In an embodiment, a higher layer of a sender of the first MAC PDU sends a first indication to a MAC sublayer of the sender of the first MAC PDU. The MAC sublayer of the sender of the first MAC PDU receives the first indication. The first indication is used to indicate that the first data packet set is discarded. The first condition includes that the first indication is received.

In an embodiment, the second processor 1001 sends a first RRC message. The first RRC message indicates first duration of the first timer.

In an embodiment, the second processor 1001 includes a second receiver.

In an embodiment, the second processor 1001 includes a second receiver.

In an embodiment, the second processor 1001 includes a second receiver and a second transmitter.

In an embodiment, the second transmitter includes the antenna 420, the transmitter 418, the multi-antenna transmit processor 471, the transmit processor 416, the controller/processor 475, and the memory 476 in FIG. 4 of this application.

In an embodiment, the second transmitter includes the antenna 420, the transmitter 418, the multi-antenna transmit processor 471, and the transmit processor 416 in FIG. 4 of this application.

In an embodiment, the second transmitter includes the antenna 420, the transmitter 418, and the transmit processor 416 in FIG. 4 of this application.

In an embodiment, the second receiver includes the antenna 420, the receiver 418, the multi-antenna receive processor 472, the receive processor 470, the controller/processor 475, and the memory 476 in FIG. 4 of this application.

In an embodiment, the second receiver includes the antenna 420, the receiver 418, the multi-antenna receive processor 472, and the receive processor 470 in FIG. 4 of this application.

In an embodiment, the second receiver includes the antenna 420, the receiver 418, and the receive processor 470 in FIG. 4 of this application.

### Embodiment 11

In Embodiment 11, for example, FIG. 11 is a flowchart of transmission of a wireless signal according to another embodiment of this application. It should be particularly noted that a sequence in this example does not limit a signal transmission sequence and an implementation sequence in this application.

For a **first node U01,** a first RRC message is received in step S11101.

For a **second node N02,** the first RRC message is sent in step S11201.

In Embodiment 11, the first RRC message indicates first duration of a first timer.

In an embodiment, the first RRC message includes at least one RRC message.

In an embodiment, the first RRC message includes at least one RRC IE (Information Element, information element) in one RRC message.

In an embodiment, the first RRC message includes at least one RRC field (Field) in one RRC message.

In an embodiment, the first RRC message includes at least one RRC field in one RRC message.

In an embodiment, the first RRC message includes a first RRC field, and the first RRC field indicates the first duration of the first timer.

In an embodiment, the first RRC field is an sr-ProhibitTimer field.

In a sub embodiment of this embodiment, the first RRC field is configured as any one of 1 ms, 2 ms, 4 ms, 8 ms, 16 ms, 32 ms, 64 ms, or 128 ms.

In an embodiment, the first RRC field is not an sr-ProhibitTimer field.

In a sub embodiment of this embodiment, a name of the first RRC field includes at least one of sr, Prohibit, Timer, or -r18.

In a sub embodiment of this embodiment, a name of the first RRC field includes sr-ProhibitTimer.

In a sub embodiment of this embodiment, the first RRC field is an sr-ProhibitTimer-r18 field.

In a sub embodiment of this embodiment, the first RRC field is configured as one of 1 ms (millisecond, millisecond), 2 ms, 4 ms, 8 ms, 16 ms, 32 ms, 64 ms, or 128 ms.

In a sub embodiment of this embodiment, the first RRC field is configured to be shorter than 1 ms.

In a sub embodiment of this embodiment, the first RRC field is configured as 0.5 ms.

In a sub embodiment of this embodiment, the first RRC field is configured as 0.25 ms.

In an embodiment, the first RRC message includes a SchedulingRequestToAddMod field, and the SchedulingRequestToAddMod field includes a SchedulingRequestId IE, the first RRC field, and an sr-TransMax field.

In an embodiment, the first RRC message includes a SchedulingRequestResourceConfig IE, and the SchedulingRequestResourceConfig IE includes a SchedulingRequestId IE and a SchedulingRequestResourceId IE.

In an embodiment, the first RRC message indicates a PUCCH resource used to carry the first SR.

In an embodiment, a value of a SchedulingRequestId IE in a SchedulingRequestToAddMod field is equal to a value of a SchedulingRequestId IE in a SchedulingRequestResourceConfig IE.

In an embodiment, the PUCCH resource of the first SR is specific to XR.

In an embodiment, the PUCCH resource of the first SR is specific to a PDU set.

In an embodiment, the PUCCH resource of the first SR is specific to the first buffer status report.

In an embodiment, the PUCCH resource of the first SR is not specific to XR.

In an embodiment, the PUCCH resource of the first SR is not specific to a PDU set.

In an embodiment, the PUCCH resource of the first SR is not specific to the first buffer status report.

A person of ordinary skill in the art may understand that all or a part of steps in the foregoing methods may be completed by a program instructing related hardware. The program may be stored in a computer-readable storage medium, such as a read-only memory, a hard disk, or an optical disc. Optionally, all or a part of steps in the foregoing embodiments may alternatively be implemented by using one or more integrated circuits. Correspondingly, the module units in the foregoing embodiments may be implemented in a form of hardware, or may implemented in a form of a software functional module. A combination of software and hardware in any specific form is not limited in this application. The user equipment, the terminal, and the UE in this application include, but are not limited to, wireless communication devices such as an unmanned aerial vehicle, a communication module on the unmanned aerial vehicle, a remote control aircraft, an aircraft, a small aircraft, a mobile phone, a tablet computer, a notebook computer, a vehicle-mounted communication device, a wireless sensor, a network card, an Internet of things terminal, an RFID terminal, an NB-IOT terminal, an MTC (Machine Type Communication, machine type communication) terminal, an eMTC (enhanced MTC, enhanced MTC) terminal, a data card, a network card, an vehicle-mounted communication device, a low-cost mobile phone, and a low-cost tablet computer. The base station or system device in this application includes, but is not limited to, a wireless communication device such as a marco cellular base station, a micro cellular base station, a femtocell, a relay base station, a gNB (NR NodeB), a NR NodeB, and a TRP (Transmitter Receiver Point, transmission reception node).

The foregoing descriptions are merely preferred embodiments of this application, and are not intended to limit the protection scope of this application. Any modification, equivalent replacement, and improvement made within the spirit and principle of this application are included in the protection scope of this application.

## Claims

1. A first node used for wireless communication, wherein the first node comprises:
a first processor, triggering a first buffer status report in response to that a first data packet set becomes available; or canceling the first buffer status report in response to that any candidate condition in a first candidate condition set is satisfied, wherein
the first data packet set comprises at least one data packet, and each data packet in the first data packet set is a data packet above a MAC sublayer; the first candidate condition set comprises at least a first condition and a second condition; the first condition comprises that the first data packet set is discarded; and the second condition comprises that a first MAC PDU is sent and the first buffer status report is generated before the first MAC PDU is assembled, wherein the first MAC PDU indicates a buffer status.

2. The first node according to claim 1, comprising:
the first processor, triggering a first SR, wherein
the first SR is triggered by the first buffer status report.

3. The first node according to claim 2, comprising:
the first processor, canceling the first SR in response to that one candidate condition in the first candidate condition set is satisfied.

4. The first node according to claim 2, comprising:
the first processor, sending the first SR; and starting a first timer in response to that the first SR is sent; or stopping the first timer in response to that one candidate condition in the first candidate condition set is satisfied, wherein
a running status of the first timer is used to determine whether to send the first SR.

5. The first node according to claim 2, comprising:
the first processor, triggering a first random access process; or stopping the first random access process in response to that one candidate condition in the first candidate condition set is satisfied, wherein
the first random access process is triggered by the first SR.

6. The first node according to any one of claims 1 to 5, wherein the first MAC PDU comprises a first-type MAC CE, and the first-type MAC CE indicates the buffer status; and the first-type MAC CE is indicated by a candidate LCID in a first candidate LCID set, and the first candidate LCID set does not comprise any one of 59, 60, 61, or 62.

7. The first node according to any one of claims 1 to 6, wherein the first MAC PDU comprises a second-type MAC CE, and the second-type MAC CE indicates the buffer status; and the second-type MAC CE is indicated by a candidate LCID in a second candidate LCID set, and the second candidate LCID set comprises at least one of 59, 60, 61, or 62.

8. The first node according to any one of claims 1 to 7, wherein the first node comprises:
the first processor, wherein a higher layer of the first node sends a first indication to a MAC sublayer of the first node; and the MAC sublayer of the first node receives the first indication, wherein
the first indication is used to indicate that the first data packet set is discarded; and the first condition comprises that the first indication is received.

9. A second node used for wireless communication, wherein the second node comprises:
a second processor, receiving a first MAC PDU, wherein
a first buffer status report is triggered in response to that a first data packet set becomes available; or the first buffer status report is canceled in response to that any candidate condition in a first candidate condition set is satisfied, wherein the first data packet set comprises at least one data packet, and each data packet in the first data packet set is a data packet above a MAC sublayer; the first candidate condition set comprises at least a first condition and a second condition; the first condition comprises that the first data packet set is discarded; and the second condition comprises that the first MAC PDU is sent and the first buffer status report is generated before the first MAC PDU is assembled, wherein the first MAC PDU indicates a buffer status.

10. A method for a first node used for wireless communication, wherein the method comprises:
triggering a first buffer status report in response to that a first data packet set becomes available; or canceling the first buffer status report in response to that any candidate condition in a first candidate condition set is satisfied, wherein
the first data packet set comprises at least one data packet, and each data packet in the first data packet set is a data packet above a MAC sublayer; the first candidate condition set comprises at least a first condition and a second condition; the first condition comprises that the first data packet set is discarded; and the second condition comprises that a first MAC PDU is sent and the first buffer status report is generated before the first MAC PDU is assembled, wherein the first MAC PDU indicates a buffer status.

11. A method for a second node used for wireless communication, wherein the method comprises:
receiving a first MAC PDU, wherein
a first buffer status report is triggered in response to that a first data packet set becomes available; or the first buffer status report is canceled in response to that any candidate condition in a first candidate condition set is satisfied, wherein the first data packet set comprises at least one data packet, and each data packet in the first data packet set is a data packet above a MAC sublayer; the first candidate condition set comprises at least a first condition and a second condition; the first condition comprises that the first data packet set is discarded; and the second condition comprises that the first MAC PDU is sent and the first buffer status report is generated before the first MAC PDU is assembled, wherein the first MAC PDU indicates a buffer status.
